(19) Europäisches Patentamt / European Patent Office / Office européen des brevets

(11) **EP 3 391 086 B1**

(12) **EUROPÄISCHE PATENTSCHRIFT**

(45) Veröffentlichungstag und Bekanntmachung des Hinweises auf die Patenterteilung:
**23.10.2024 Patentblatt 2024/43**

(21) Anmeldenummer: **16801163.3**

(22) Anmeldetag: **14.11.2016**

(51) Internationale Patentklassifikation (IPC):
**G01C 21/00** *(2006.01)* **G01S 19/14** *(2010.01)*
**G01S 19/39** *(2010.01)*

(52) Gemeinsame Patentklassifikation (CPC):
**G01S 19/14; G01C 21/3819; G01C 21/3844; G01S 19/393**

(86) Internationale Anmeldenummer:
**PCT/EP2016/077517**

(87) Internationale Veröffentlichungsnummer:
**WO 2017/102192 (22.06.2017 Gazette 2017/25)**

(54) **VERBESSERTES VERFAHREN ZUM ERMITTELN DER RANDBEBAUUNG EINER FAHRBAHN FÜR DIE LOKALISIERUNG VON KRAFTFAHRZEUGEN**

IMPROVED METHOD FOR DETERMINING THE ROADSIDE DEVELOPMENT OF A ROAD FOR LOCATING MOTOR VEHICLES

PROCÉDÉ AMÉLIORÉ DE DÉTERMINATION DE LA CONSTRUCTION DE BORD D'UNE CHAUSSÉE POUR LA LOCALISATION DE VÉHICULES AUTOMOBILES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015 DE 102015225577**

(43) Veröffentlichungstag der Anmeldung:
**24.10.2018 Patentblatt 2018/43**

(73) Patentinhaber: **Bayerische Motoren Werke Aktiengesellschaft**
**80809 München (DE)**

(72) Erfinder:
- **JORDAN, Justus**
  **80807 München (DE)**
- **KLANNER, Felix**
  **82319 Starnberg (DE)**
- **RAUCH, Andreas**
  **85777 Kammerberg (DE)**
- **HIRSENKORN, Nils**
  **80802 München (DE)**

(56) Entgegenhaltungen:
**DE-A1- 102013 208 521**

- **H.J CHANG ET AL: "Multi-robot SLAM with topological/metric maps", INTELLIGENT ROBOTS AND SYSTEMS, 2007. IROS 2007. IEEE/RSJ INTERNATIONAL CONFERENCE ON, 1 January 2007 (2007-01-01), Piscataway, NJ, USA, pages 1467 - 1472, XP055338139, ISBN: 978-1-4244-0911-2, DOI: 10.1109/IROS.2007.4399142**
- **JESSE LEVINSON ET AL: "Map-based Precision Vehicle Localization in Urban Environments", PROCEEDINGS OF ROBOTICS: SCIENCE AND SYSTEMS, 1 June 2007 (2007-06-01), Atlanta, GA, USA, XP055046040, Retrieved from the Internet <URL:http://www.roboticsproceedings.org/rss03/p16.pdf> [retrieved on 20121129]**

**Beschreibung**

Die Erfindung betrifft ein verbessertes Verfahren zum Lokalisieren von Fahrzeugen auf einer Fahrbahn mithilfe des Auswertens der Randbebauung und ein Verfahren zum Ermitteln der Randbebauung.

Hochautomatisierte oder vollständig autonom fahrende Fahrzeuge müssen ihre Position auf der Fahrbahn genau ermitteln. Die Genauigkeit üblicher satellitengestützter Systeme (GNSS-gestützter Systeme) ist nicht ausreichend, um die Position eines Fahrzeuges auf der Fahrbahn hinreichend genau zu ermitteln.

Daher wird im Stand der Technik vorgeschlagen, dass Fahrzeuge ihrer Position auf der Fahrbahn gegenüber der Randbebauung ermitteln. Es sind hierfür Systeme zur Erstellung von hoch genauen Straßenmodellen erforderlich. Derartige Straßenmodelle umfassen deutlich mehr Informationen als derzeit in Serie eingesetzte Karten bei Navigationssystemen. Die Straßenmodelle umfassen eine Information über die Anzahl der Fahrstreifen, die Art der Fahrstreifenmarkierungen, die Art und den Ort der Randbebauung, die Art und den Ort von Beschilderungen etc. Im Stand der Technik werden derartige Straßenmodelle üblicherweise von Sensorfahrzeugen aufgenommen, die über präzise und komplexe Messinstrumente verfügen. Diese Sensorfahrzeuge weisen sehr genaue Lokalisierungssysteme, beispielsweise GNSS-gestützte Inertialplattformen sowie hoch auflösende Sensoren zum Erfassen des Umfeldes, beispielsweise eine Kamera und einen Laserscanner, auf. Derartige Systeme sind beispielsweise in Vehicle Self-localization with High-Precision Digital Maps, Andreas Schindler, IEEE Intelligent Vehicles Symposium, 2013 und Generating High Precision Maps for Advanced Guidance Support, Ulf Noyer et al., IEEE Intelligent Vehicles Symposium, 2008, Kollektives Erlernen hochgenauer Straßenmodelle, Sebastian Rauch, 6. Tagung Fahrerassistenz, München, 2013 offenbart.

Um ein Fahrzeug bei einer Fahrt, insbesondere auf einer Autobahn oder einer anderen mehrspurigen Überlandstraße fahrstreifengenau zu lokalisieren, wird auf eine derartige hochgenaue digitale Karte sowie auf eine hochpräzise Sensorik zurückgegriffen. Derartige Verfahren befinden sich derzeit im Versuchsstadium.

Die Dissertation Vehicle Self-localization Using High-Precision Digital Maps, Andreas Schindler, FORWISS 2013 offenbart ein Verfahren, das ebenfalls ein derartiges hoch genaues Straßenmodell benötigt, wobei für die Lokalisierung des Fahrzeuges während der Fahrt einfache GNSS-Daten und Kameradaten verwendet werden.

Die Verfahren und Systeme des Standes der Technik erfordern für eine fahrstreifengenaue Lokalisierung eines Fahrzeuges ein hochpräzises Straßenmodell, das mittels Sensorfahrzeugen mit komplexen Sensoren erzeugt wird. Ein derartiges Straßenmodell weist den Nachteil auf, dass Messdaten erneut aufgenommen werden müssen, wenn Änderungen an der Randbebauung durchgeführt werden. Ferner weisen die Verfahren und Systeme des Standes der Technik den Nachteil auf, dass in Abhängigkeit der Anzahl von Fahrstreifen, dem umliegenden Verkehr, den Witterungsbedingungen etc. ein mehrfaches Befahren eines Straßenabschnittes erforderlich sein kann, um die Randbebauung zu erfassen. Ein weiterer Nachteil der Systeme und Verfahren des Standes der Technik ist, dass das Sensorfahrzeug einen Fahrbahnabschnitt erneut befahren muss, um zu prüfen, ob das hochpräzise Straßenmodell noch aktuell ist oder beispielsweise aufgrund baulicher Änderungen veraltet ist.

Die CN 101206644 B offenbart das zentrale Sammeln von von Fahrzeugen ermittelten Daten.

Die DE 10 2013 208 521 A1 offenbart ein Verfahren zum kollektiven Erlernen und Erstellen eines digitalen Straßenmodells. Es werden dabei von einer Mehrzahl von Fahrzeugen Trajektorien- und Perzeptionsdaten erfasst. Es werden Assoziierungen zwischen den Trajektorien erstellt, indem für entsprechende, zu assoziierende Trajektorienpunkte Merkmalsraster und Wahrscheinlichkeitsfeld-Merkmalsraster gebildet werden und diese korreliert werden, um Assoziationshypothesen zu bilden.

Die Erfindung stellt sich zur Aufgabe, ein verbessertes Verfahren zum Erzeugen von Straßenmodellen und zum Lokalisieren eines Fahrzeuges anzugeben.

Die Aufgabe der Erfindung wird durch ein Verfahren nach einem der unabhängigen Ansprüche gelöst. Die abhängigen Ansprüche geben bevorzugte Ausführungsformen an.

Ein erfindungsgemäßes Verfahren zum Schätzen der Position der Randbebauung einer Straße weist den Schritt des Befahrens eines Straßenabschnittes mit einer Mehrzahl erster Fahrzeuge auf, die sich je entlang einer Trajektorie bewegen, wobei jedes der Mehrzahl erster Fahrzeuge die im Folgenden beschriebenen Schritte durchführt. Jedes erste Fahrzeug ermittelt mittels eines satellitengestützten Positionierungssystems mit Positionsbestimmungsmittel des jeweiligen ersten Fahrzeuges einen ersten Wert einer satellitengestützten Position des jeweiligen ersten Fahrzeuges. Der erste Wert weist eine erste Genauigkeit auf. Mit anderen Worten, jedes erste Fahrzeug ermittelt seine Position mittels eines satellitengestützten Systems, beispielsweise eines GNSS-Systems, wenn es sich entlang der Trajektorie bewegt. Die Genauigkeit des ersten Wertes ist durch die Genauigkeit des satellitengestützten Systems beschränkt.

Jedes Fahrzeug ermittelt eine Position der Randbebauung mittels einer Messung mit einem Sensor des Fahrzeuges und auf Grundlage der satellitengestützten Position des ersten Fahrzeuges. Die ermittelte Position der Randbebauung wird an eine zentrale Einrichtung, beispielsweise einen Backend, gesendet.

Das Verfahren umfasst auch die Schritte des Empfangens einer Mehrzahl ermittelter Position der Randbebauung, die je von einem einer Mehrzahl Fahrzeuge ermittelt wurden, an der zentralen Einrichtung, und des Ermittelns der wahrscheinlichen Position der Randbebauung auf Grundlage der Mehrzahl ermittelter Position der Randbebauung, die je von einem einer Mehrzahl Fahrzeuge ermittelt wurden. Indem die Positionen der Randbebauung von einer Mehrzahl Kraftfahrzeugen mit den bordeigenen Sensoren aufgenommen werden und mit satellitengestützten Positionen des Fahrzeuges verknüpft werden, kann jedes Fahrzeug Werte für die Position der Randbebaueng ermitteln. In der zentralen Einrichtung werden die von der Mehrzahl Fahrzeuge ermittelten Positionen verarbeitet, um die wahrscheinliche Position der Randbebauung, beispielsweise mit einer höheren Genauigkeit, zu ermitteln. Die wahrscheinliche Position der Randbebauung wird an zumindest ein Fahrzeug gesendet.

Jedes erste Fahrzeug ermittelt erste Werte von Objektpositionen $Z_k = \{(x_n, y_n)|n = 1,..., N\}$ als ermittelte Position einer Randbebauung zum Zeitpunkt k einer Mehrzahl N statischer Objekte $Z_k$ außerhalb der Fahrbahn gegenüber dem jeweiligen ersten Fahrzeug mittels des Sensors des jeweiligen ersten Fahrzeuges. Die ersten Werte der Objektpositionen werden zu einer Mehrzahl von Zeitpunkten k, k = 1,..., K ermittelt. Die ersten Werte der Objektpositionen werden auch auf Grundlage der satellitengestützten Position des ersten Fahrzeuges ermittelt, was aber nicht notwendigerweise der Fall sein muss. Hierzu kann beispielsweise bei einer Ausführungsform eine Koordinatentransformation verwendet werden, die die ersten Werte der Objektpositionen in einem Weltkoordinatensystem ermittelt. Bei einer anderen Ausführungsform können die ersten Werte im Sensorkoordinatensystem, im Fahrzeugkoordinatensystem oder in einem beliebigen anderen quasi-stationären oder beweglichen Koordinatensystem ermittelt werden. Die ersten Werte der Objektpositionen $Z_k$ weisen eine zweite Genauigkeit auf. Die zweite Genauigkeit wird zum einen durch die erste Genauigkeit der satellitengestützten Position und zum zweiten durch die Genauigkeit des Sensors zum Erfassen der Randbebauung bestimmt. Die ermittelte Position der Randbebauung wird an eine zentrale Einrichtung gesendet. Die zentrale Einrichtung kann ein sogenannter Backend sein.

Das Verfahren ermittelt eine erste Wahrscheinlichkeitsverteilung $P(S|Z_K)$, die anzeigt, ob sich an den zweiten Werten von Objektpositionen $(x_i, y_i)$ einer erfassten Ebene ein statisches Objekt einer Randbebauung befindet, aufgrund der Mehrzahl K Ermittlungen der ersten Werte von Objektpositionen $Z_k$ zu den Zeitpunkten k für k = 1,..., K, wobei $P(S|Z_K)$ die bedingte Wahrscheinlichkeit für eine Randbebauung $S = (x_i, y_i)$ auf Grundlage der Messungen Z ist, wobei Z die (x, y)-Punktwolke umfasst, wobei $Z_K$ alle vorangegangenen Ermittlungen zu den Zeitpunkten k von Objektpositionen $Z_k$ und die aktuelle Ermittlung zum Zeitpunkt K von Objektpositionen $Z_K$ des ersten Fahrzeuges umfasst (k = 1, ..., K). Mit anderen Worten, ein Objekt der Randbebauung wird zu einer Mehrzahl von Zeitpunkten k mit dem Sensor erfasst und kann anschließend in ein Weltkoordinatensystem oder ein anderes Koordinatensystem transformiert werden. Diese Werte werden als erste Werte der Objektpositionen bezeichnet. Bei dem Schritt der Ermittlung einer ersten Wahrscheinlichkeitsverteilung wertet das Verfahren alle ermittelten ersten Werte von Objektpositionen Zk aus, um den wahrscheinlichen Ort S eines Objektes der Randbebauung zu ermitteln. Dadurch lassen sich Ungenauigkeiten aufgrund des Sensors reduzieren. Die erste Wahrscheinlichkeitsverteilung wird vom jeweiligen ersten Fahrzeug ermittelt und an eine zentrale Einheit als ermittelte Position der Randbebauung übertragen.

Es ist aber auch außerhalb des erfindungsgemäßen Verfahrens möglich, dass die erste Wahrscheinlichkeitsverteilung von einer zentralen Einheit außerhalb des ersten Fahrzeuges ermittelt wird.

Das Verfahren umfasst auch das Empfangen an der zentralen Einrichtung einer Mehrzahl erster Wahrscheinlichkeitsverteilungen für die wahrscheinlichen Position der Randbebauung, die je von einem einer Mehrzahl Fahrzeuge ermittelt wurden, als ermittelte Position der Randbebauung, und die wahrscheinliche Position der Randbebauung auf Grundlage der Mehrzahl ersten Wahrscheinlichkeitsverteilungen ermitteln. Da jedes Fahrzeug bereits die wahrscheinliche Position der Randbebauung ermittelt, kann eine höhere Genauigkeit und einen höhere Stabilität gegenüber Störungen erreicht werden.

Das Verfahren ermittelt dritte Werte der Objektpositionen $m_{fusion}$ als wahrscheinliche Position Randbebauung auf Grundlage einer Mehrzahl erster Wahrscheinlichkeitsverteilungen, die je von einer Mehrzahl Fahrzeuge ermittelt wurden, wobei die dritten Werte der Objektpositionen $m_{fusion}$ der Randbebauung eine höhere Genauigkeit als die ersten Werte der Objektpositionen $(x_n, y_n)$ und eine höhere Genauigkeit als die zweiten Werte der Objektpositionen $(x_i, y_i)$ aufweisen können. Dieser Schritt kann von der zentralen Einheit ausgeführt werden. Die ersten Fahrzeuge können die ersten Werte der Objektpositionen oder bevorzugt die erste Wahrscheinlichkeitsverteilung an die zentrale Einheit senden. Aus der Mehrzahl erster Wahrscheinlichkeitsverteilungen, die je von unterschiedlichen Fahrzeugen ermittelt werden, werden die dritten Werte der Objektpositionen $m_{fusion}$ der Position der Randbebauung erzeugt.

Die vorliegende Erfindung hat den Vorteil, dass die Position von Objekten der Randbebauung neben einer Fahrbahn mit einer sehr hohen Genauigkeit ermittelt werden kann, ohne dass hierfür Sensorfahrzeuge mit kostspieligen Sensoren erforderlich sind. Die Erfinder der vorliegenden Erfindung haben vorgeschlagen, dass Serienfahrzeuge mit einem GNSS-System des Standes der Technik und mit Standardsensoren mit einer bei Serienfahrzeugen üblichen Genauigkeit verwendet werden, um die Position der Randbebauung zu ermitteln. Dadurch kann zum einen die Position von Objekten der Randbebauung kostengünstig ermittelt werden. Zum anderen ist es möglich, Änderungen der Randbebauung kostengünstig und schnell zu erfassen. Dadurch ist es möglich, sehr präzise Karten über die Randbebauung ohne aufwändige Sensoren zu ermitteln und in einem aktuellen Zustand zu halten. Die Randbebauung kann eine Leitplanke einer Autobahn oder einer beliebigen anderen mehrspurigen Straße sein. Die dritten Werte können in einer zentralen Einheit ermittelt werden, beispielsweise einem sogenannten Backend.

Die dritten Werte der Objektpositionen $m_{fusion}$ können mittels einer Mehrzahl zweiter Werte $m_v$ der Objektpositionen $(x_i, y_i)$ ermittelt werden, die je von einer Mehrzahl erster Fahrzeuge ermittelt wurden. Die Mehrzahl erster Fahrzeuge kann sich zum Zeitpunkt der Erfassung der Randbebauung an einer satellitengestützten Position befunden haben, die sich innerhalb eines Toleranzbandes befindet. Falls die dritten Werte der Objektpositionen $m_{fusion}$ lediglich aus Wahrscheinlichkeitsverteilungen ermittelt werden, die von Fahrzeugen erzeugt wurden, die sich etwa an der gleichen Position befanden, als die Randbebauung ermittelt wurde, kann die Genauigkeit des Verfahrens erhöht werden.

Es ist nicht erforderlich, dass das Verfahren ein gespeichertes Modell eines statischen Objektes der Randbebauung verwendet. Das Objekt kann sich neben der Fahrbahn befinden und beispielsweise Leitplanken, Schilder, Leitpfosten oder dergleichen umfassen.

Der Schritt des Ermittelns der ersten Wahrscheinlichkeitsverteilung $P(S|Z_K)$ kann den Schritt des Ermittelns einer zweiten Wahrscheinlichkeitsverteilung $P(S|Z_k)$ aufweisen, die angibt, ob sich zum Zeitpunkt k der Messung an den von einem der ersten Fahrzeuge ermittelten Objektpositionen $(x_n, y_n)$ eine Randbebauung befindet. Die zweite Wahrscheinlichkeitsverteilung $P(S|Z_k)$ kann mittels eines Gauß-Prozesses ermittelt werden. Die Messung zum Zeitpunkt k ergibt sich zu $Z_k = \{(x_n, y_n)|n = 1, ..., N\}$ und umfasst alle erfassten ersten Werte der Position der N Objekte der Randbebauung zum Zeitpunkt k. Die zweite Wahrscheinlichkeitsverteilung $P(S|Z_k)$ kann über jeden beliebigen Ort eine Aussage treffen, wie wahrscheinlich sich an diesem Ort eine Randbebauung befindet. An Orten, an denen keine Messpunkte $(x_n, y_n)$ in der Nähe liegen, ist die Unsicherheit entsprechend höher als an Orten, bei denen ein Messpunkt $(x_n, y_n)$ in der Nähe liegt.

Der Schritt des Ermittelns der zweiten Wahrscheinlichkeitsverteilung $P(S|Z_k)$, der prüft, ob sich zum Zeitpunkt der Messung k an den von einem Fahrzeug ermittelten Objektpositionen $(x_n, y_n)$ eine Randbebauung befindet, kann den Schritt des Erzeugens einer multi-modalen Wahrscheinlichkeitsverteilung $P(S|Z_k)$ über die Randbebauung auf Grundlage der an den Objektpositionen $(x_n, y_n)$ erkannten Mehrzahl N statischer Objekte zum Zeitpunkt k aufweisen. Anhand zeitlich aufeinander folgender Messungen k = 1,..., K ergibt sich die Gesamtwahrscheinlichkeit über die Randbebauung zum aktuellen Zeitpunkt K in der Fahrebene $P(S|Z_K)$ aufgrund aller zuvor getätigten Messungen zu den Zeitpunkten k = 1, ...,K bzw. zu den einzelnen Zeitpunkten k = 1, ..., K-1 und der Messung zum aktuellen Zeitpunkt K .

Der Schritt des Ermittelns der ersten Wahrscheinlichkeitsverteilung $P(S|Z_K)$ kann das Zusammenführen und/oder Prädizieren der zeitlich aufeinanderfolgenden Messungen zu den Zeitpunkten k = 1,... , K der Objektpositionen in der Fahrebene auf Grundlage aller zuvor ermittelten zweiten multi-modalen Wahrscheinlichkeitsverteilungen $P(S|Z_k)$ zu den Zeitpunkten k = 1,..., K mittels der Formel

$$P(S|Z_K) \;=\; \frac{1}{K}\sum_{k=1}^{K} P(S|Z_k)$$

durchführen.

Mit diesem Schritt wird über die Wahrscheinlichkeitsverteilungen der Mittelwert gebildet.

Das Verfahren kann eine dritte Wahrscheinlichkeitsverteilung $P(S_O|Z_K)$ der Position der statischen Objekte in einer Richtung orthogonal zur Fahrtrichtung O aus der ersten Wahrscheinlichkeitsverteilung $P(S|Z_K)$ in der Fahrebene ermitteln.

Für die Positionierung im Fahrstreifen wird in der Regel der orthogonale Abstand in Fahrtrichtung bzw. in Straßenrichtung zur Randbebauung genutzt. Bei den vorangegangenen Schritten wurden zweidimensionale Werte ermittelt und könnten auch für eine Längspositionierung verwendet werden, wobei diese Information bis zu einer eventuellen Detektion entsprechenden Landmarken, beispielsweise von Schilderbrücken bzw. Brücken, für eine Längskorrektur nicht ausreichend ist.

Das Verfahren kann einen zweiten Wert $m_v$ der Position der Randbebauung an einer ersten Seite des jeweiligen Fahrzeuges auf Grundlage der dritten Wahrscheinlichkeitsverteilung $P(S_O|Z_K)$ der statischen Objekte ermitteln. Das Verfahren kann ferner eine Unsicherheit $\sigma_v$ des zweiten Wertes der Position der Randbebauung bzw. der Mehrzahl statischer Objekte an der ersten Seite des jeweiligen ersten Fahrzeuges auf Grundlage der dritten

Wahrscheinlichkeitsverteilung $P(S_O|Z_K)$ der statischen Objekte ermitteln. Jedes erste Fahrzeug kann den zweiten Wert der Position der Mehrzahl statischer Objekte an der ersten Seite und die Unsicherheit des zweiten Wertes an eine zentrale Einheit übertragen. Die Unsicherheit des zweiten Wertes beruht im Wesentlichen auf der ersten Genauigkeit des ersten Wertes der satellitengestützten Position. Die Unsicherheit kann eine Standardabweichung oder eine Varianz sein. Die erste Seite kann vorzugsweise die linke Seite sein.

Das Verfahren kann einen zweiten Wert der Position der Randbebauung an einer zweiten Seite des jeweiligen ersten Fahrzeuges auf Grundlage der dritten Wahrscheinlichkeitsverteilung $P(S_O|Z_K)$ der statischen Objekte ermitteln. Ferner kann das Verfahren eine Unsicherheit des zweiten Wertes der Position der Mehrzahl statischer Objekte an der zweiten Seite des jeweiligen ersten Fahrzeuges auf Grundlage der dritten Wahrscheinlichkeitsverteilung $P(S_O|Z_K)$ der statischen Objekte ermitteln. Der zweite Wert der Position der Mehrzahl statischer Objekte an der zweiten Seite und die Unsicherheit des zweiten Wertes an der zweiten Seite können an die zentrale Einheit übertragen werden. Die zweite Seite ist der ersten Seite entgegengesetzt und ist vorzugsweise die rechte Seite.

Das Verfahren kann ferner den Schritt des Empfangens des zweiten Wertes der Position und des Unsicherheitsmaßes des zweiten Wertes der Position von einer Mehrzahl V Fahrzeuge aufweisen. Der zweite Wert kann eine Absolutposition oder eine Relativposition sein. Falls der zweite Wert eine Relativposition ist, kann auch die satellitengestützten Position des jeweiligen ersten Fahrzeuges der Mehrzahl V erster Fahrzeuge empfangen werden.

Das Verfahren kann ferner einen Mittelwert mfusion der Position der Randbebauung und der Positionsunsicherheit $\sigma_{fusion}$ der Randbebauung auf Grundlage des zweiten Wertes der Position an der ersten und/oder der zweiten Seite des Fahrzeuges und der Unsicherheit des Wertes der Position an der ersten und/oder zweiten Seite des Fahrzeuges ermitteln. Das Erzeugen der dritten Werte der Objektpositionen $m_{fusion}$ und der Positionsunsicherheit $\sigma_{fusion}$ kann das Verwenden eines Distanz-Maßes für ein Assoziationsproblem für die relative Distanz zur detektierten Randbebauung aufweisen. Hierfür kann beispielsweise die Mahalanobis-Distanz verwendet werden.

Dies dient dazu, die Werte zu bestimmen, die in die Fusion eingehen (beispielsweise Ausreiser filtern). Werden anstelle globaler Randbebauungskoordinaten nur Relativkoordianten übermittelt, müssen die ermittelten Abstände der Randbebauung von den einzelnen Fahrstreifen noch separiert werden, beispielsweise jeweils um den charakteristischen Abstand und auf deutschen Autobahnen nach Norm um einen Offset etwa 3,5 m voneinander, und/oder mit den einzelnen Schätzungen bzw. Wahrscheinlichkeitsverteilungen ebenfalls vom gleichen Fahrstreifen fusioniert werden.

Dabei wird von mehreren Fahrstreifen aus dieselbe Randbebauung mit einer unterschiedlichen Distanz detektiert. Ohne Information über die Absolutposition ergeben sich somit bei einer mehrspurigen Fahrbahn mehrere Häufungen von Hypothesen für den Abstand zur Randbebauung, d.h. der identischen Randbebauung. Mittels der Mahalanobis-Distanz kann ermittelt werden, welche Hypothesen ein Abbild der mehreren Fahrstreifen erstellen (kleine Mahalanobis-Distanz, mit Unsicherheit gewichtetes Abstandsmaß). Anschließend werden die jeweils assoziierten Hypothesen fusioniert.

Alternativ hierzu oder zusätzlich können die dritten Werte der Objektpositionen $m_{fusion}$ der Positionen der Randbebauung und/oder der Positionsunsicherheit $\sigma_{fusion}$ der Randbebauung unter Verwendung folgender Formeln berechnet werden:

$$m_{fusion} = \sigma^2_{fusion} * \sum_{v=1}^{V} \frac{m_v}{\sigma_v^2};$$

und

$$\sigma^2_{fusion} = \left( \sum_{v=1}^{V} \frac{1}{\sigma_v^2} \right)^{-1};$$

wobei $m_v$ die Werte für die Position der Randbebauung in einer Richtung orthogonal zur Fahrtrichtung und $\sigma_v$ Unsicherheit für die Position der Randbebauung in einer Richtung orthogonal zur Fahrtrichtung auf Grundlage der Messungen der Fahrzeuge v = 1, ..., V sind.

Die Fusion gemäß der vorstehenden Formel findet jeweils an den lokalen Orten statt. Der ermittelte Wert $m_{fusion}$ und die Unsicherheit $\sigma_{fusion}$, wo sich die Randbebauung befindet, gilt lokal für den Ort und/oder den Streckenabschnitt und/oder für die GNSS-Position, bei dem dieses Verfahren angewendet wurde. Damit ergibt sich für jede gewollte GNSS-Koordinate ein fusionierter Positionswert bzw. ein dritter Positionswert und eine Unsicherheit nach der vorstehenden Formel.

Das Verfahren kann ferner die dritten Werte der Objektpositionen $m_{fusion}$ der Positionen und/oder der Positionsunsicherheit $\sigma_{fusion}$ an zumindest ein Kraftfahrzeug übertragen. Die dritten Werte der Objektpositionen und/oder die Positionsunsicherheit können in Abhängigkeit der satellitengestützten Position an das Kraftfahrzeug übertragen werden. Das Kraftfahrzeug kann ein erstes Kraftfahrzeug sein, das die Werte der Objektpositionen und die Wahrscheinlichkeitsverteilungen ermittelt hat. Dadurch erhält das Fahrzeug eine genauere Schätzung der Randbebauung zum genaueren Ermitteln der eigenen Position. Das Fahrzeug kann aber auch ein zweites Fahrzeug sein, das die Werte der Positionen der Randbebauung nicht ermittelt hat. Dennoch erhält dieses Fahrzeug eine genaue Schätzung der Randbebauung zum genaueren Lokalisieren der eigenen Position des Fahrzeuges.

Das Verfahren umfasst auch die Schritte des Korrigierens der vom jeweiligen ersten Fahrzeug ermittelten satellitengestützten Position mittels der dritten Werte der Objektpositionen $m_{fusion}$ als wahrscheinliche Position der Randbebauung, um korrigierte Trajektorien zu erzeugen, und des Ermittelns von Häufungen und/oder einer Anzahl von Häufungen von korrigierten Trajektorien, wobei die Positionen der Häufungen je einen Fahrstreifen anzeigen und die Anzahl von Häufungen eine Anzahl der Fahrstreifen anzeigt. Die Ermittlung der Fahrstreifen und deren Anzahl wird folglich auf Grundlage der korrigierten Trajektorien der Fahrzeuge durchgeführt.

Die in der zentralen Einheit bestimmte Position der Randbebauung wird an das Fahrzeug übertragen. Folglich ist dem Fahrzeug die Position der Randbebauung bekannt, beispielsweise als Abstand der Randbebauung zu einer Referenz oder als Abstand der Randbebauung zu den einzelnen Fahrstreifen. Das Fahrzeug kann jetzt seine Abstandsmessung zur Randbebauung mit den fusionierten Ergebnissen bzw. dritten Werten, die die zentrale Einheit zur Verfügung stellt bzw. gestellt hat, vergleichen. Das Fahrzeug kann sich dann relativ zur Randbebauung im Fahrstreifen positionieren und nicht mehr lediglich mittels GNSS-Daten.

Die Erfindung offenbart auch ein Verfahren zum Prüfen und/oder Verändern der vermuteten Position eines Fahrzeuges. Das Fahrzeug erfasst die Position der Randbebauung neben der Straße mittels eines Sensors. Die Position der Randbebauung kann mittels der zuvor beschriebenen Verfahren ermittelt werden, beispielsweise mittels der zuvor beschriebenen ersten Wahrscheinlichkeitsverteilung $P(S|Z_K)$. Das Fahrzeug vergleicht die vom Sensor erfasste Position der Randbebauung mit der erwarteten Position $m_{fusion}$ der Randbebauung. Die erfasste Position der Randbebauung kann mittels des zuvor beschriebenen Verfahrens ermittelt werden. Die erwartete Position können die zuvor ermittelten dritten Werte der Objektpositionen $m_{fusion}$ sein. Das Fahrzeug kann ein erstes Fahrzeug sein, das zuvor die Werte für die Objektpositionen der Randbebauung ermittelt hat. Das Fahrzeug kann aber auch ein zweites Fahrzeug sein, das zuvor keine Werte für die Objektpositionen der Randbebauung ermittelt hat.

Die Erfindung betrifft auch ein Verfahren zum Erkennen einer Straßenbaustelle und/oder zum Erkennen einer Änderung einer Straßenführung, das die zuvor beschriebenen Schritte aufweist.

Das Verfahren zum Erkennen einer Straßenbaustelle und/oder zum Erkennen einer Änderung einer Straßenführung kann prüfen, ob sich die ermittelte wahrscheinliche Position der Randbebauung in einem ersten Bereich innerhalb eines vorbestimmten Zeitraum verändert hat. Alternativ oder zusätzlich kann das Verfahren zum Erkennen einer Straßenbaustelle und/oder zum Erkennen einer Änderung einer Straßenführung prüfen, ob sich auf Grundlage der von zumindest einer vorbestimmten Anzahl von ersten Fahrzeugen ermittelten Positionen der Randbebauungen die wahrscheinliche Position der Randbebauung im ersten Bereich geändert hat. Die vorbestimmte Anzahl kann eine Häufigkeit, beispielsweise eine vorbestimmte Anzahl in einem vorbestimmten Zeitraum, umfassen. Falls sich die ermittelte wahrscheinliche Position der Randbebauung innerhalb eines vorbestimmten Zeitraum im ersten Bereich verändert hat, kann das Verfahren anzeigen, dass im ersten Bereich eine Baustelle vorhanden sein kann und/oder sich die Straßenführung geändert hat. Der erste Bereich kann mit der GNSS-Position verknüpft sein, um den ersten Bereich an andere Fahrzeuge zu übergeben. Der vorbestimmte Zeitraum kann zumindest 30 min betragen. Dadurch können Wanderbaustellen und/oder Tagesbaustellen erkannt werden. Vorzugsweise kann der vorbestimmte Zeitraum zumindest 2 Stunden, höchst vorzugsweise zumindest einen Tag betragen. Dadurch kann eine größere Basis für statistische Auswertungen geschaffen werden. Die vorbestimmte Anzahl kann zumindest 5 Fahrzeuge, bevorzugt 10 Fahrzeuge, mehr bevorzugt zumindest 25 Fahrzeuge umfassen.

Das Verfahren kann prüfen, ob eine Mehrzahl Kandidaten als ermittelte wahrscheinliche Position der Randbebauung in einem zweiten Bereich ermittelt werden. Falls eine Mehrzahl Kandidaten als ermittelte wahrscheinliche Position der Randbebauung im zweiten Bereich ermittelt werden, kann das Verfahren anzeigen, dass im zweiten Bereich eine Baustelle vorhanden sein kann und/oder sich die Straßenführung geändert hat. Diese Schritte können erkennen, dass eine Straßenführung aufgeteilt wurde. Hierzu können eine statistische Annahme und/oder eine Häufigkeitsverteilung verwendet werden. In Abgrenzung zur Erkennung der Position und/oder Anzahl von Fahrstreifen werden beim Schritt der Erkennung der Mehrzahl Kandidaten nicht die Trajektorien verwendet, deren GNSS-Position korrigiert wurde, sondern die von den einzelnen Fahrzeugen ermittelten ersten Wahrscheinlichkeitsverteilungen.

Die Erfindung betrifft auch ein Verfahren zum Erkennen der Randbebauung einer Straßenbaustelle, das die zuvor beschriebenen Schritte aufweist.

Die Erfindung betrifft auch ein Computerprogrammprodukt, das, wenn es in einen Speicher eines Computers mit einem Prozessor geladen wird, die Schritte eines der zuvor beschriebenen Verfahren durchführt.

Die Erfindung wird nun unter Bezugnahme auf die beigefügten Figuren beschrieben, die nicht beschränkende Ausführungsformen der Erfindung zeigen, wobei

Figur 1 eine Mehrzahl von Trajektorien dargestellt sind, wie sie von einem satellitengestützten Positionierungssystems erfasst werden;

Figur 2 von einem Radar erfasste Objekte der Randbebauung zeigt;

Figur 3 Positionen der Objekte der Randbebauung nach einem Filtern zeigt;

Figur 4 Daten der Randbebauung zeigt, wie sie von einem Fahrzeug aufgenommen wurde;

Figur 5 Daten der Randbebauung zeigt, die von mehreren Fahrzeugen aufgenommen wurden;

Figur 6 die wahrscheinliche Position der Randbebauung zeigt;

Figur 7 ein Szenario ohne Baustelle zeigt;

Figur 8 die Ermittlung der Position des Fahrzeuges gegenüber der Randbebauung zeigt;

Figur 9 Positionen von Fahrstreifen zeigt; und

Figur 10 ein Szenario mit Baustelle zeigt.

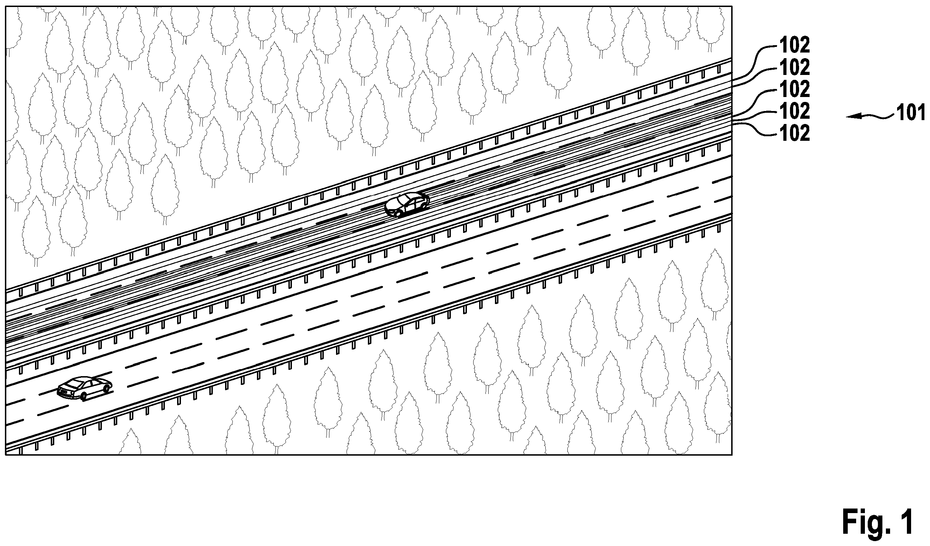

Figur 1 zeigt eine zweispurige Autobahn 100, wobei eine Fahrbahn 101 drei Fahrstreifen aufweist, auf denen Fahrzeuge fahren können. Die Fahrzeuge ermitteln ihre Position auf der Fahrbahn 101 mittels satellitengestützter Positionierungssysteme. Derartige satellitengestützten Positionierungssysteme, beispielsweise GPS weisen eine Genauigkeit im Bereich von einigen Metern auf. Eine derartige Genauigkeit reicht nicht aus, um zu bestimmen, auf welchem Fahrstreifen der Fahrbahn 101 das Fahrzeug fährt. Die Linien 102 zeigen die von den Fahrzeugen mittels des satellitengestützten Systems ermittelte eigene Position. Die Linien 102 streuen über die gesamte Breite der Fahrbahn 101.

Wie zuvor beschrieben wurde, ist eine wichtige Anforderung beim Einsatz autonom fahrender Fahrzeuge, dass die Position des Fahrzeuges so genau bestimmt werden kann, dass die Position des Fahrzeuges einem Fahrstreifen zugeordnet werden kann.

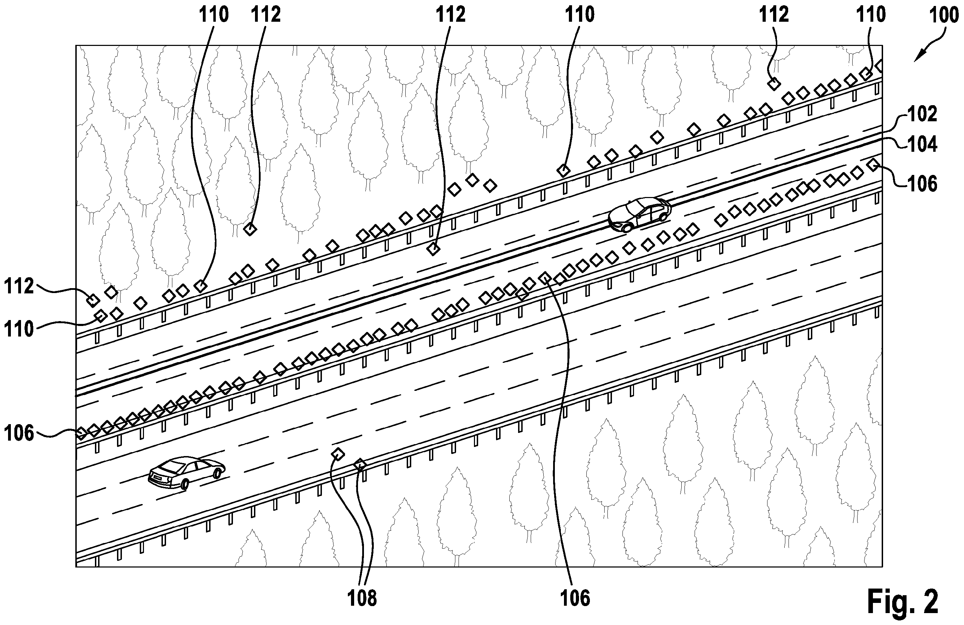

Es wird auf Figur 2 Bezug genommen. Die erste Linie 102 zeigt die Trajektorien eines Fahrzeuges, die Positionen statischer Objekte $Z_k$ 106, 108, 110, 112, die mittels eines Sensors im Fahrzeug ermittelt wurden, beispielsweise mittels eines RADAR-Sensors und/oder eines LIDAR-Sensors. Die erste Linie 102 zeigt die Trajektorie des Fahrzeugs, das die Objektpositionen 106, 108, 110, 112 ermittelt hat.

Die zweite Linie 104 zeigt die mittlerer Trajektorie aller in Figur 1 gezeigten Trajektorien 102.

Das Fahrzeug auf der Trajektorie 102 ermittelt für die Objekte, die potentiell Teil einer Randbebauung sein können, beispielsweise ein Leitplanke, die Positionen $Z_k$, die mit den Bezugszeichen 106, 108, 110, 112 bezeichnet sind. Für jedes der N Objekte an den Positionen $(x_n, y_n)$, n = 1, ...., N werden zu den Zeitpunkten k = 1, ..., K eine Mehrzahl ersten Positionswerte ermittelt, aber nicht notwendigerweise für jeden Zeitpunkt k. Aufgrund der Genauigkeit der satellitengestützten Positionsmessung des Fahrzeuges werden die Positionen der Objekte, die die Randbebauung bilden, nicht genau ermittelt, sondern mit einem Messfehler, der im Bereich einiger Meter liegt.

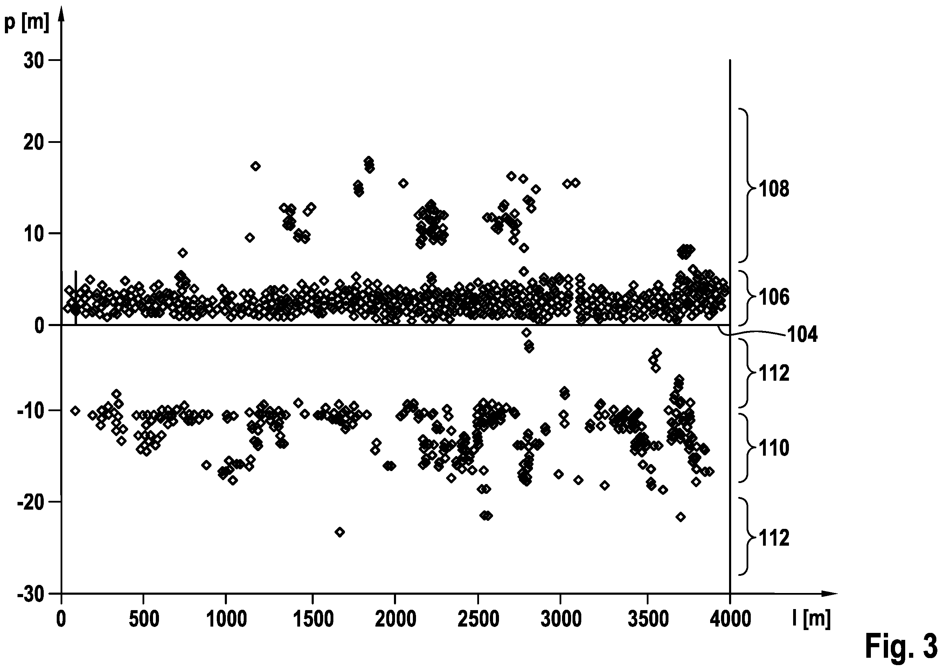

Es wird auf Figur 3 Bezug genommen, an deren Abszisse die Entfernung aufgetragen ist, die das Fahrzeug entlang der Trajektorie 102 zurücklegt, und an deren Ordinate die gemessene Position der Randbebauung aufgetragen ist. Das erfindungsgemäße Verfahren verwendet bei der beschriebenen Ausführungsform die Positionen 106 der Randbebauung an der linken Seite des Fahrzeuges, die sich innerhalb eines vorbestimmten Toleranzbandes befinden. Folglich werden gemessene Positionen 108, die sich außerhalb des Toleranzbandes an der linken Seite befinden, gelöscht. Da bei der in Figur 3 betrachteten Ausführungsform die Randbebauung an der rechten Seite des Fahrzeuges nicht relevant ist, werden die gemessenen Objektpositionen 110 und der Streuwerte 112 unterhalb der Abszisse gelöscht bzw. nicht weiter ausgewertet. Die mittlere Trajektorie 104 bildet die Abszisse als Referenz.

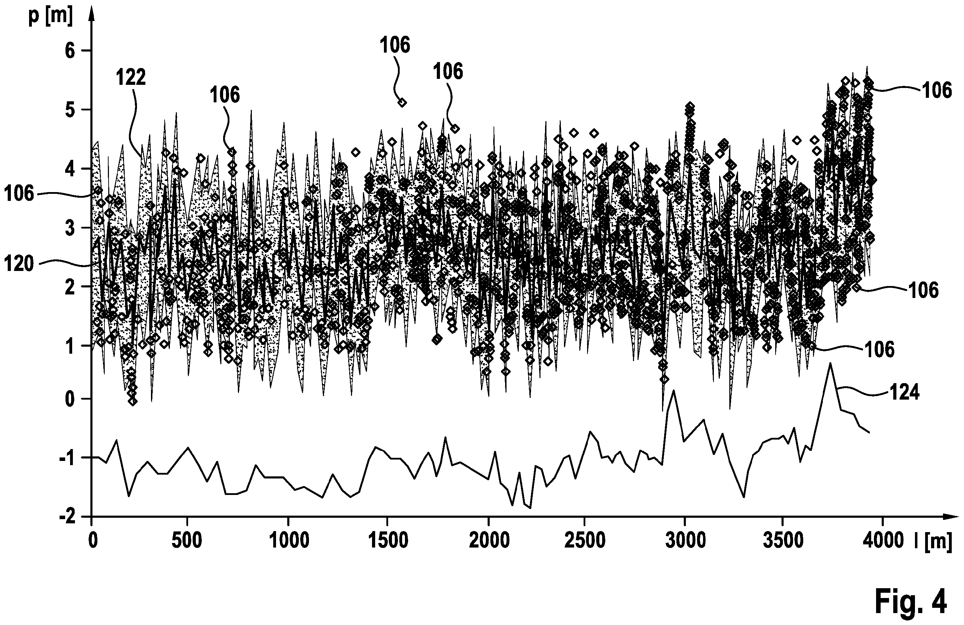

Es wird auf Figur 4 Bezug genommen, in der die Punkte 106 erfasste Positionen der Objekte der Randbebauung zeigen, wie sie von einem einzigen Fahrzeug aufgenommen wurden. Die Linie 120 zeigt den Mittelwert der Wahrscheinlichkeitsverteilung $P(S_O|Z_K)$ als zweiten Wert der gemessenen Positionen der Randbebauung an. Jedes Objekt der Randbebauung wird, während das Fahrzeug entlang der Randbebauung fährt, mehrmals gemessenen, da der Sensor, beispielsweise der RADAR-Sensor, das Umfeld des Fahrzeuges in einem breiten Winkelspektrum erfasst, beispielsweise durch die Anordnung des Sensors am vorderen Bereich des Fahrzeuges und/oder aufgrund der Reichweite des Sensors.

Die Linie 122 zeigt die Streuung des Mittelwertes an, beispielsweise die Varianz. Die mittlere Trajektorie 104 bildet die Abszisse als Referenz.

Der Mittelwert muss nicht notwendigerweise ein arithmetischer oder geometrischer Mittelwert sein. Der Mittelwert kann mittels eines statistischen Verfahrens, beispielsweise eines so genannten Gauß-Prozesses, ermittelt werden, der dem Fachmann bekannt ist.

Die Linie 124 zeigt die Abweichung der Trajektorie 102 des Fahrzeuges, das die Positionen 106 der Objekte der Randbebauung ermittelt hat, von der mittleren Trajektorien 104 an. Die Linie 124 repräsentiert also die Trajektorie 102 mit der durchschnittlichen Trajektorie 104 als Referenz.

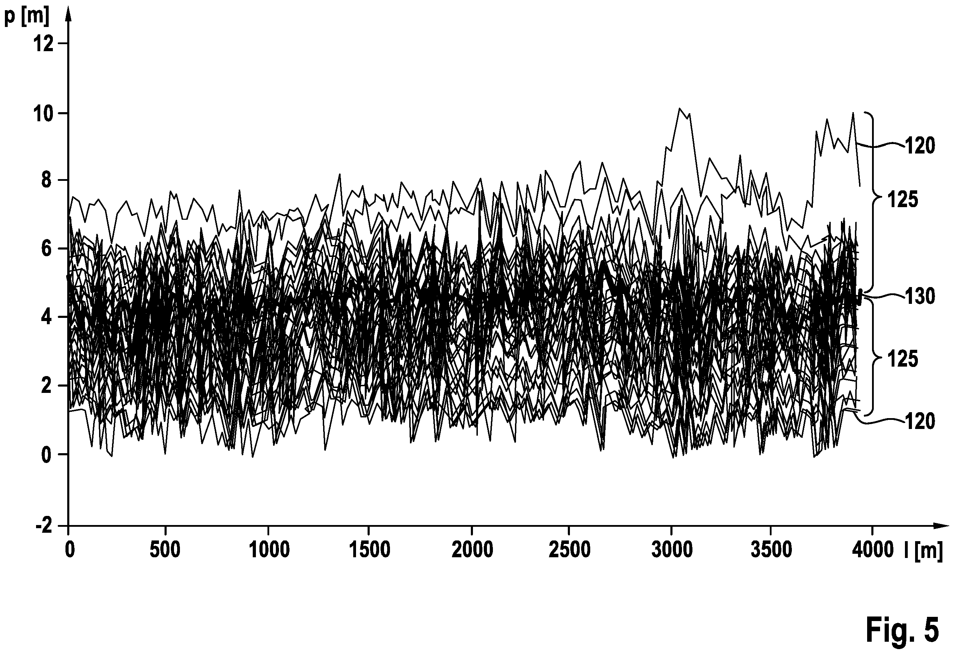

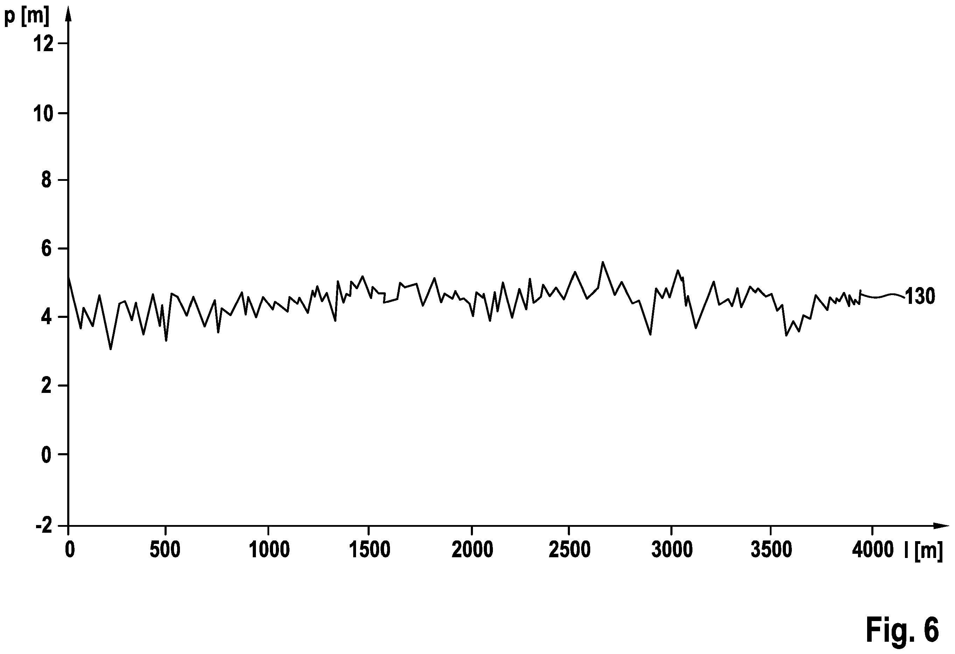

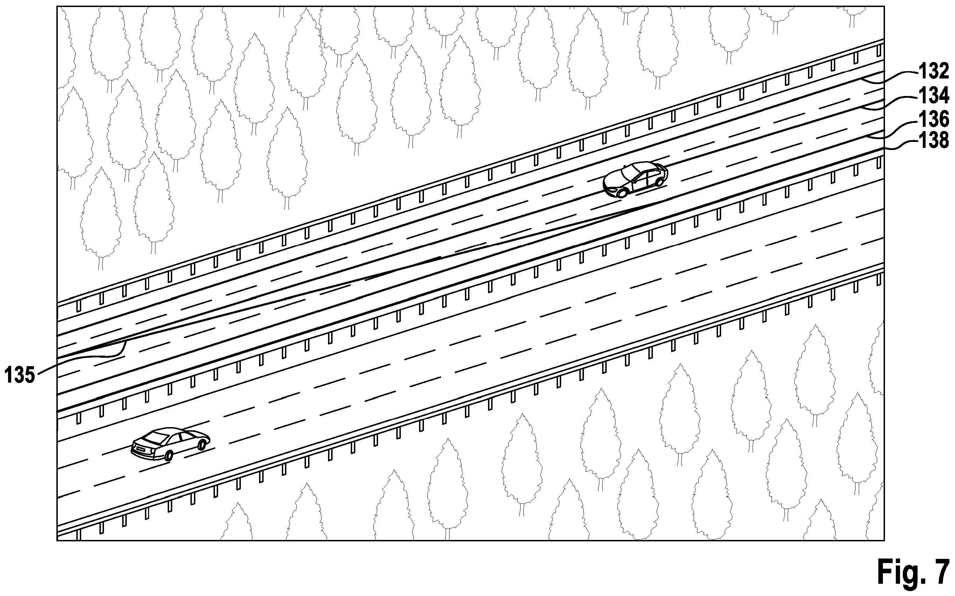

Es wird auf Figuren 5, 6 und 7 Bezug genommen, in denen gezeigt wird, wie die wahrscheinliche Position als dritter Wert $P(S_O|Z_K)$ der Position Objekte der Randbebauung mittels der von einer Mehrzahl von Kraftfahrzeugen bestimmten zweiten Werte ermittelt werden. Die Linienschar 125 zeigt die vermuteten Positionen (zweite Werte) der Randbebauung 138, wie sie durch einzelne Fahrzeuge 132, 134, 136 ermittelt wurden. Jede Linie 120 wird durch ein Fahrzeug erzeugt. Jede Linie 120 bildet einen Teil der Schar 125. Die Linie 138 zeigt die wahrscheinliche Position der linken Randbebauung, wie sie durch das erfindungsgemäße Verfahren, beispielsweise in einer zentralen Einrichtung (Backend) ermittelt wird. Die Trajektorien 132, 134, 136 sind drei Trajektorien aus dem Strauß an Trajektorien 102 von Figur 1 und wurden entsprechend dem Verfahren in ihrer Position korrigiert.

Die wahrscheinliche Position 138 (dritter Wert) der linken Randbebauung kann beispielsweise mittels folgender Formeln ermittelt werden:

$$m_{fusion} = \sigma^2_{fusion} * \sum_{v=1}^{V} \frac{m_v}{\sigma_v^2};$$

und

$$\sigma^2_{fusion} = \left( \sum_{v=1}^{V} \frac{1}{\sigma_v^2} \right)^{-1};$$

wobei $m_v$ die Werte für die Position der Randbebauung in einer Richtung orthogonal zur Fahrtrichtung und $\sigma_v$ Unsicherheit für die Position der Randbebauung in einer Richtung orthogonal zur Fahrtrichtung auf Grundlage der Messungen der Fahrzeuge $v = 1, ..., V$ sind.

Die wahrscheinliche Position der Randbebauung kann auch mittels der Mahalanobis-Distanz ermittelt werden. Dies dient dazu, die Werte zu bestimmen welche in die Fusion eingehen (beispielsweise Ausreiser filtern). Werden anstelle globaler Randbebauungskoordinaten nur Relativkoordianten übermittelt, müssen die ermittelten Abstände der Randbebauung von den einzelnen Fahrstreifen noch separiert werden, beispielsweise jeweils um den charakteristischen Abstand und auf deutschen Autobahnen nach Norm um einen Offset etwa 3,5 m voneinander, und/oder mit den einzelnen Schätzungen ebenfalls vom gleichen Fahrstreifen fusioniert werden.

Das Verfahren ermittelt folglich die wahrscheinliche Anzahl an Fahrstreifen und den wahrscheinlichen Abstand 130 der Fahrstreifen zur linken Randbebauung. Diese Daten werden an Fahrzeuge übermittelt, die den entsprechenden Straßenabschnitt befahren.

Anschließend wird unter Bezugnahme auf Figuren 4 und 6 bis 8 beschrieben, wie ein Fahrzeug 142 seine eigene Position gegenüber der Randbebauung schätzt. Für ein Fahrzeug 142 ist die Referenztrajektorie 104 (wahrscheinliche Position des Fahrstreifens), die eigene Trajektorie 102, die eigene Randbebauungsschätzung 120, die so ermittelt wird, wie zuvor unter Bezugnahme auf Figuren 1 bis 4 beschrieben wurde, und die allgemeine Randbebauungsschätzung 130 auf Grundlage mehrerer Fahrzeuge, die so ermittelt wird, wie zuvor unter Bezugnehme auf Figuren 5 bis 7 beschrieben wurde, bekannt. Die Linie 130 gibt an, welchen wahrscheinlichen Abstand D die Randbebauung von der Referenztrajektorie 104 des mittleren Fahrstreifens hat. Ferner könnte definiert sein, wo sich bezogen auf die Referenztrajektorie 104 die (drei) Fahrstreifen befinden.

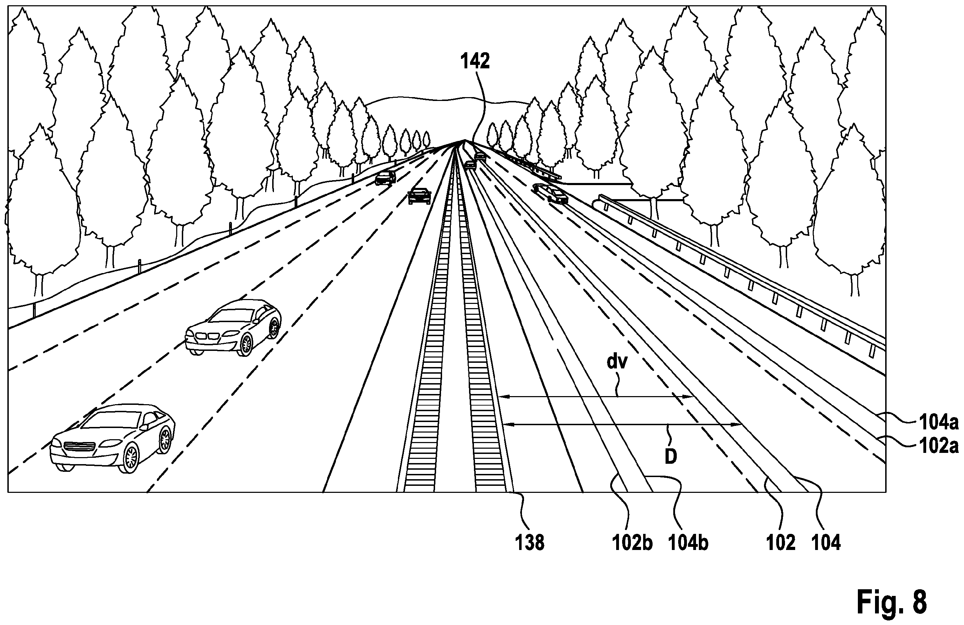

Figur 8 zeigt eine Autobahn mit drei Fahrstreifen. Die Trajektorie 104a zeigt die wahrscheinliche Mittenposition des rechten Fahrstreifen, die Trajektorie 104 zeigt die wahrscheinliche Mittenposition des mittleren Fahrstreifen und die Trajektorie 104b zeigt die wahrscheinliche Mittenposition des linken Fahrstreifen. Die Trajektorie 102a zeigt die die tatsächlich gefahrene Trajektorie einen Fahrzeuges auf dem rechten Fahrstreifen, die Trajektorie 102 zeigt die die tatsächlich gefahrene Trajektorie einen Fahrzeuges 142 auf dem mittleren Fahrstreifen und die Trajektorie 102b zeigt die tatsächlich gefahrene Trajektorie eines Fahrzeuges auf dem linken Fahrstreifen.

Das Fahrzeug 142 bestimmt mit der eigenen Randbebauungsschätzung 120 den eigenen Abstand dv von der eigenen Trajektorie 102 zur Randbebauung 138 durch Vergleich mit der allgemeinen Randbebauungsschätzung 130.

Wenn davon ausgegangen wird, dass die Randbebauung in der Regel eine realidentische Randbebauung ist, kann das Fahrzeug sich aufgrund der Randbebauung positionieren und die Ungenauigkeit auf Basis von GNSS-basierten Daten wesentlich verkleinern. Der hierzu verwendete Algorithmus kann beispielsweise auf dem SLAM-Verfahren (Simultaneous Localization and Mapping; simultane Lokalisierung und Zuordnung) beruhen.

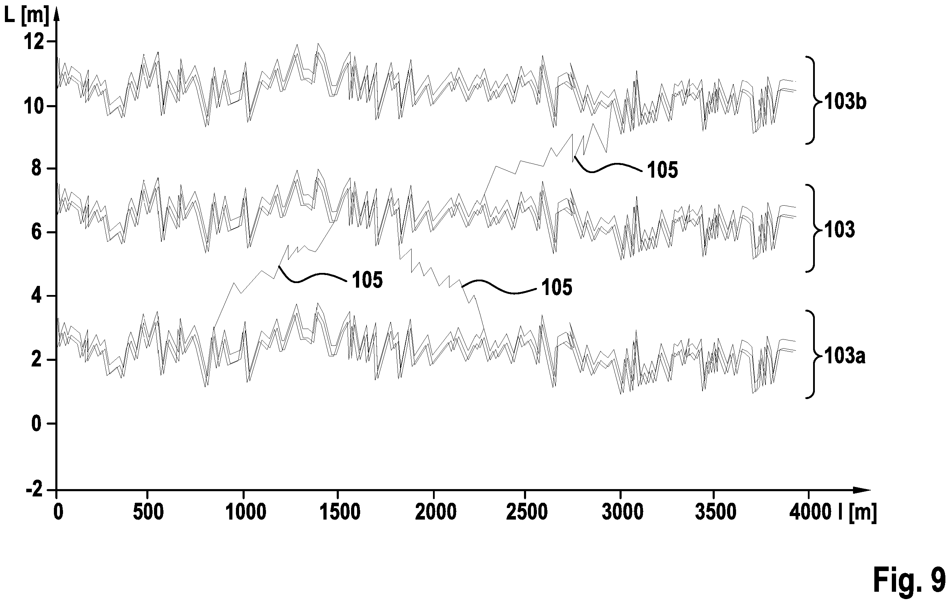

Unter Bezugnahme auf Figuren 8 und 9 wird die Ermittlung der Position und/oder Anzahl von Fahrstreifen erläutert. Die Trajektorien 102, wie sie in Figur 1 gezeigt sind, werden mittels des zuvor beschriebenen Verfahrens so korrigiert werden, dass die Positionen der Trajektorien 103, 103a und 103b auf die Randbebauung 138 bezogen sind. Jedes Fahrzeug vergleicht seine Trajektorie und den ermittelten Abstand von der Randbebauung mit dem mittleren Abstand von der Randbebauung von und der Referenztrajektorie, die von der zentralen Einheit übertragen werden bzw. wurden. Jedes Fahrzeug korrigiert dann entsprechend seine eigene Trajektorie mit dem Wert aus dem Vergleich und es entstehen die Trajektorien 103, 103a, 103b. Dabei kann das Fahrzeug ein Wissen über den Abstand der Fahrstreifen und/oder einen Abstand der Fahrstreifen von der Randbebauung verwenden.

Die Trajektorien 103 zeigen die tatsächliche Trajektorien der Fahrzeuge, die auf dem mittleren Fahrstreifen gefahren sind. Die Trajektorien 103a zeigen die tatsächlichen Trajektorien der Fahrzeuge, die auf dem linken Fahrstreifen gefahren sind. Die Trajektorien 103b zeigen die tatsächlichen Trajektorien der Fahrzeuge, die auf dem rechten Fahrstreifen gefahren sind. Mittels einer Ermittlung von Häufungen kann die Anzahl und/oder die Position der Fahrstreifen ermittelt werden. Ein Fahrstreifen kann in der zentralen Einrichtung dann angenommen werden, falls die Anzahl der Fahrzeuge, deren Trajektorie einer Häufungsannahme angehört, einen vorbestimmten Schwellenwert überschreitet. Dadurch können beispielsweise Trajektorien 105 von Fahrzeugen, die die Spur wechseln, herausgefiltert werden, da nur wenige Fahrzeuge (deren Anzahl niedriger als der Schwellenwert ist) innerhalb eines Bereichs den Fahrstreifen wechseln.

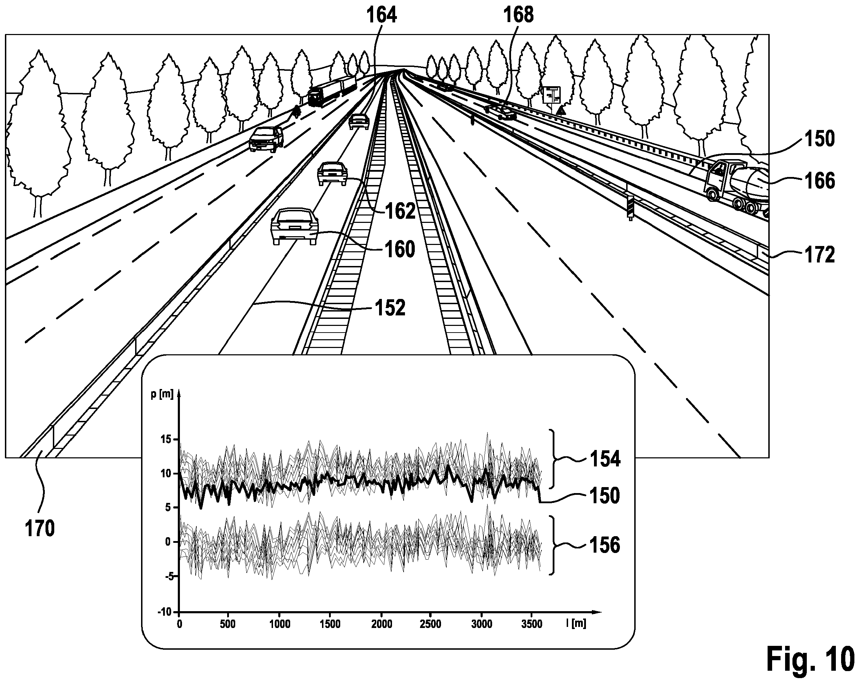

In Figur 10 ist ein Szenario gezeigt, das sich am gleichen Ort wie das in Figuren 1 bis 6 gezeigte Szenario befindet. Bei dem in Figur 10 gezeigten Szenario ist eine Baustelle auf dem in Figur 8 gezeigten Autobahnabschnitt eingerichtet. Teile der Fahrbahn wurden für die Baustelle gesperrt. Folglich mussten andere Fahrstreifen eingerichtet werden. Die Fahrzeuge 160, 162 und 164, die auf einem ersten abgetrennten Fahrstreifen im Bereich einer Trajektorie 152 fahren, ermitteln einen wahrscheinlichen Abstand von der ersten Randbebauung 170. Der von den Fahrzeugen 160, 162, 164 ermittelte wahrscheinliche Abstand der Randbebauung ergibt eine erste Schar 154 von wahrscheinlichen Positionen der Randbebauung. Die Fahrzeuge 166, 168, die auf einem zweiten abgetrennten Fahrstreifen im Bereich einer Trajektorie 150 fahren, der von dem ersten Fahrstreifen baulich getrennt ist, ermitteln eine zweite Schar 156 von wahrscheinlichen Positionen der Randbebauung 172.

Die zentrale Einrichtung ermittelt zum einen, dass sich die Position der Randbebauung gegenüber dem in Figuren 1 bis 6 gezeigten Szenario in einen vorbestimmten Zeitraum geändert hat. Die Anzahl der in dem in Figur 10 gezeigten Szenario ermittelten veränderten wahrscheinlichen Positionen der Randbebauung überschreitet einen vorbestimmten Schwellenwert. Daher kann das Verfahren ermitteln, dass die Randbebauung aufgrund einer Baustelle oder einer baulichen Veränderung verändert wurde.

Zum anderen ermitteln kann die zentrale Einrichtung, dass sich aufgrund der zwei Scharen 154, 156 mehrere Kandidaten für die wahrscheinliche Position der Randbebauung vorhanden sind. Daher kann die zentrale Einrichtung ermitteln, dass die Randbebauung aufgrund einer Baustelle oder einer baulichen Veränderung verändert wurde.

Das erfindungsgemäße Verfahren ermöglicht die Erstellung und Aktualisierung von Navigationsdaten mit einer hohen Genauigkeit ohne Einsatz von spezialisierten Messfahrzeugen. Ferner kann das erfindungsgemäße Verfahren zur Detektion von Baustellen eingesetzt werden.


**Patentansprüche**

**1.** Verfahren zum Schätzen der Position der Randbebauung ( 138) einer Straße, aufweisend die folgenden Schritte:

- Befahren eines Straßenabschnittes mit einer Mehrzahl erster Fahrzeuge, die sich je entlang einer Trajektorie ( 102 ) bewegen, wobei jedes der Mehrzahl erster Fahrzeuge

die folgenden Schritte durchführt:

- Ermitteln einer satellitengestützten Position des jeweiligen ersten Fahrzeuges mittels eines satellitengestützten Positionierungssystems mit Positionsbestimmungsmittels des jeweiligen ersten Fahrzeuges, wenn es sich entlang der Trajektorie ( 102 ) bewegt; und
- Ermitteln einer Position der Randbebauung mittels einer Messung mit einem Sensor des ersten Fahrzeuges und auf Grundlage der satellitengestützten Position des ersten Fahrzeuges; und
- Senden der ermittelten Position der Randbebauung an eine zentrale Einrichtung, wobei zum Ermitteln einer wahrscheinlichen Position der Randbebauung die folgenden Schritte durch die zentrale Einrichtung durchgeführt werden:
- Empfangen einer Mehrzahl ermittelter Positionen der Randbebauung, die je von einem der Mehrzahl erster Fahrzeuge ermittelt wurden, an der zentralen Einrichtung; und
- Ermitteln der wahrscheinlichen Position der Randbebauung auf Grundlage der Mehrzahl ermittelter Positionen der Randbebauung, die je von einem der Mehrzahl erster Fahrzeuge ermittelt wurden,

**gekennzeichnet durch** folgende Schritte:

- Ermitteln erster Werte von Objektpositionen ( 106 , 108, 110 , 112) $Z_k = \{(x_n, y_n)|n = 1, ..., N\}$ als ermittelte Position der Randbebauung zum Zeitpunkt k einer Mehrzahl N statischer Objekte $Z_k$ außerhalb der Fahrbahn gegenüber dem jeweiligen ersten Fahrzeug mittels des Sensors des jeweiligen ersten Fahrzeuges zu einer Mehrzahl Zeitpunkte k = 1, ..., K und auf Grundlage der satellitengestützten Position des ersten Fahrzeuges;
- Senden der ersten Werte als ermittelte Position der Randbebauung an die zentrale Einrichtung;
- Ermitteln einer ersten Wahrscheinlichkeitsverteilung $P(S|Z_K)$, die angibt, ob sich an zweiten Werten $m_v$ ( 120 ) von Positionen $(x_i, y_i)$ eine Randbebauung befindet, auf Grundlage der Mehrzahl K Ermittlungen der ersten Werte von Objektpositionen $Z_K$ zu den Zeitpunkten k für k = 1, ... K, wobei $P(S|Z_K)$ die bedingte Wahrscheinlichkeit für eine statische Randbebauung S repräsentiert und wobei $Z_K$ alle vorangegangenen Ermittlungen zu den Zeitpunkten k von ersten Werten der Objektpositionen $Z_k$ und die aktuelle Ermittlung zum Zeitpunkt K von ersten Werten der Objektpositionen $Z_K$ des ersten Fahrzeuges umfasst;

- Senden der ersten Wahrscheinlichkeitsverteilung als ermittelte Position der Randbebauung an die zentrale Einrichtung;

- Empfangen einer Mehrzahl erster Wahrscheinlichkeitsverteilungen für die wahrscheinlichen Position der Randbebauung, die je von einem der Mehrzahl erster Fahrzeuge ermittelt wurden, an der zentralen Einrichtung als ermittelte Position der Randbebauung; und

- Ermitteln dritter Werte ( 130 ) der Objektpositionen $m_{fusion}$ als wahrscheinliche Position der Randbebauung auf Grundlage der Mehrzahl erster Wahrscheinlichkeitsverteilungen ( 120 ), die je von der Mehrzahl unterschiedlicher erster Fahrzeuge ermittelt wurden.

2. Verfahren nach Anspruch 1, **dadurch gekennzeichnet, dass** die dritten Werte ( 130 ) der Objektpositionen $m_{fusion}$ mittels der Mehrzahl zweiter Werte $m_v$ ( 120) ermittelt werden, die je von der Mehrzahl erster Fahrzeuge ermittelt wurden.

3. Verfahren nach Anspruch 1 oder 2, **dadurch gekennzeichnet, dass** der Schritt des Ermittelns einer ersten Wahrscheinlichkeitsverteilung ( 120 ) $P(S|Z_K)$ folgenden Schritt aufweist:

- Ermitteln einer zweiten Wahrscheinlichkeitsverteilung $P(S|Z_k)$, die angibt, ob sich zum Zeitpunkt k der Messung an den von einem der ersten Fahrzeuge ermittelten Objektpositionen $(x_n, y_n)$ eine Randbebauung befindet.

4. Verfahren nach Anspruch 3, **dadurch gekennzeichnet, dass** der Schritt des Ermittelns der zweiten Wahrscheinlichkeitsverteilung $P(S|Z_k)$, ob sich zum Zeitpunkt der Messung k an den von einem der ersten Fahrzeuge ermittelten Objektpositionen $(x_n, y_n)$ eine Randbebauung befindet, folgenden Schritt aufweist:

- Erzeugen einer ersten multi-modalen Wahrscheinlichkeitsverteilung $P(S|Z_k)$ über die Randbebauung auf Grundlage der an den Objektpositionen $(x_n, y_n)$ erkannten Mehrzahl N statischen Objekte ( 106 ) zum Zeitpunkt k.

5. Verfahren nach Anspruch 4, **gekennzeichnet durch** folgenden Schritt:

- Ermitteln einer zweiten multi-modalen Wahrscheinlichkeitsverteilung $P(S \mid Z_K)$ auf Grundlage der ersten multi-modalen Wahrscheinlichkeitsverteilungen $P(S \mid Z_K)$ des ersten Wertes der Objektpositionen $(x_n, y_n)$ des zumindest einen statischen Objektes bei zeitlich aufeinander folgender Messungen zu den Zeitpunkten k = 1, ..., K.

6. Verfahren nach Anspruch 5, **dadurch gekennzeichnet, dass** der Schritt des Ermittelns der zweiten multi-modalen Wahrscheinlichkeitsverteilung $P(S|Z_K)$ folgenden Schritt umfasst:

- Zusammenführen und/oder Prädizieren der zeitlich aufeinander folgenden Messungen zu den Zeitpunkten k = 1, ..., K der Objektpositionen in der Fahrebene auf Grundlage aller zuvor ermittelten ersten Wahrscheinlichkeitsverteilungen $P(S|Z_K)$ zu den einzelnen Zeitpunkten k mittels der Formel:

$$P(S|Z_K)|_K = \frac{1}{K} \sum_{k=1}^{K} P(S|Z_k)$$

7. Verfahren nach einem der vorhergehenden Ansprüche, **dadurch gekennzeichnet, dass** das zumindest eine statische Objekt ohne gespeichertes Modell erfasst wird.

8. Verfahren nach einem der vorhergehenden Ansprüche, **gekennzeichnet durch** den Schritt des Ermittelns einer dritten Wahrscheinlichkeitsverteilung $P(S_O|Z_K)$ der Position der statischen Objekte ( 106 ) in einer Richtung orthogonal zur Fahrtrichtung O aus der ersten Wahrscheinlichkeitsverteilung $P(S|Z_K)$ in der Fahrebene.

9. Verfahren nach Anspruch 8, **gekennzeichnet durch** folgenden Schritt:

- Ermitteln eines zweiten Wertes m$_v$ der Position ( 120 ) der Randbebauung an einer ersten Seite des jeweiligen ersten Fahrzeuges auf Grundlage der dritten Wahrscheinlichkeitsverteilung P(S$_O$|Z$_K$) der statischen Objekte ( 106 );
- Ermitteln einer Unsicherheit σ$_v$ ( 122 ) des zweiten Wertes der Position der Randbebauung an einer ersten Seite des jeweiligen ersten Fahrzeuges auf Grundlage der dritten Wahrscheinlichkeitsverteilung P(S$_O$|Z$_K$) der statischen Objekte ( 106 ); und
- Übertragen des zweiten Wertes m$_v$ der Position ( 120 ) der Randbebauung an der ersten Seite und der Unsicherheit ( 122 ) des zweiten Wertes an eine zentrale Einheit.

**10.** Verfahren nach Anspruch 9, **gekennzeichnet durch** die folgenden Schritte:

- Ermitteln eines zweiten Wertes m$_v$ der Position ( 120 ) der Randbebauung an einer zweiten Seite des jeweiligen ersten Fahrzeuges auf Grundlage der dritten Wahrscheinlichkeitsverteilung P(S$_O$|Z$_K$) der statischen Objekte ( 106 );
- Ermitteln einer Unsicherheit σ$_v$ ( 122 ) des zweiten Wertes der Position an der zweiten Seite des jeweiligen ersten Fahrzeuges auf Grundlage der dritten Wahrscheinlichkeitsverteilung P(S$_O$|Z$_K$) der Mehrzahl statischen Objekte; und
- Übertragen des zweiten Wertes der Position ( 120 ) der Mehrzahl statischer Objekte an der zweiten Seite und der Unsicherheit ( 122 ) des zweiten Wertes an die zentrale Einheit.

**11.** Verfahren nach einem der Ansprüche 9 oder 10, **gekennzeichnet durch** folgende Schritte:

- Empfangen des zweiten Wertes m$_v$ der Position ( 120 ) der Randbebauung und des Unsicherheitsmaßes σ$_v$ ( 122 ) des zweiten Wertes ( 120 ) der Position der Randbebauung von einer Mehrzahl V erster Fahrzeuge ( 102 ); und
- Ermitteln der Position m$_{fusion}$ ( 130 ) der Randbebauung ( 138 ) und der Positionsunsicherheit σ$_{fusion}$ der Randbebauung ( 138 ) auf Grundlage des zweiten Wertes der Position ( 120 ) und der Unsicherheit des zweiten Wertes der Position ( 122 ) an der ersten und/oder zweiten Seite des Fahrzeuges.

**12.** Verfahren nach einem der Ansprüche 9 bis 11, **dadurch gekennzeichnet, dass** der Schritt des Erzeugens der dritten Werte ( 130 ) der Positionen m$_{fusion}$ der Randbebauung und der Positionsunsicherheit σ$_{fusion}$ der Randbebauung zumindest eines von Folgendem aufweist:

- Verwenden eines Distanz-Maßes; und/oder
- Berechnen der dritten Werte ( 130 ) der Objektpositionen m$_{fusion}$ der Positionen der Randbebauung ( 106 ) und der Positionsunsicherheit σ$_{fusion}$ der Randbebauung unter Verwendung der folgenden Formeln:

$$m_{fusion} = \sigma^2_{fusion} * \sum_{v=1}^{V} \frac{m_v}{\sigma^2_v}$$

und

$$\sigma^2_{fusion} = \left( \sum_{v=1}^{V} \frac{1}{\sigma^2_v} \right)^{-1}.$$

**13.** Verfahren nach Anspruch 11 oder 12, **gekennzeichnet durch** folgenden Schritt:

- Übertragen der Position der Randbebauung ( 138 ) m$_{fusion}$ und der Positionsunsicherheit σ$_{fusion}$ der Randbebauung ( 138 ) an zumindest ein Fahrzeug.

**14.** Verfahren nach einem der Ansprüche 11 bis 13, **gekennzeichnet durch** folgende Schritte:

- Korrigieren der vom jeweiligen ersten Fahrzeug ermittelten satellitengestützten Position mittels der dritten Werte ( 130 ) der Objektpositionen m$_{fusion}$ als wahrscheinliche Position der Randbebauung, um korrigierte Trajektorien ( 103, 103a , 103b ) zu erzeugen; und

- Ermitteln von Häufungen und/oder einer Anzahl von Häufungen von korrigierten Trajektorien ( 103 , 103a , 103b ), wobei die Positionen der Häufungen je einen Fahrstreifen anzeigen und die Anzahl von Häufungen eine Anzahl der Fahrstreifen anzeigt.

15. Verfahren zum Prüfen und/oder Verändern der vermuteten Position eines Fahrzeuges, **gekennzeichnet durch** die folgenden Schritte:

   - Erfassen einer erfassten Position der Randbebauung ( 106 ) mittels eines auf einer Straße fahrenden Fahrzeuges; und
   - Vergleichen der vom Fahrzeug erfassten Position der Randbebauung mit einer erwarteten Position der Randbebauung ( 130 );

   wobei die erfasste Position der Randbebauung ( 106 ) mittels des Verfahrens nach einem der Ansprüche 1 bis 14 ermittelt wird.

16. Verfahren zum Erkennen einer Straßenbaustelle und/oder zum Erkennen einer Änderung einer Straßenführung, aufweisend die Schritte des Verfahrens nach einem der Ansprüche 1 bis 14.

17. Verfahren nach Anspruch 16, **gekennzeichnet durch** folgende Schritte:

   - Prüfen, ob sich die ermittelte wahrscheinliche Position der Randbebauung in einem ersten Bereich innerhalb eines vorbestimmten Zeitraum und/oder ob sich auf Grundlage der von zumindest einer vorbestimmten Anzahl von ersten Fahrzeugen ermittelten Positionen der Randbebauungen die wahrscheinliche Position der Randbebauung im ersten Bereich verändert hat; und
   - falls sich die ermittelte wahrscheinliche Position der Randbebauung im ersten Bereich verändert hat, anzeigen, dass im ersten Bereich eine Baustelle vorhanden sein kann und/oder sich die Straßenführung geändert hat.

18. Verfahren nach Anspruch 16 oder 17, **gekennzeichnet durch** folgende Schritte:

   - Prüfen, ob eine Mehrzahl Kandidaten als ermittelte wahrscheinliche Position der Randbebauung in einem zweiten Bereich ermittelt werden; und
   - falls eine Mehrzahl Kandidaten als ermittelte wahrscheinliche Position der Randbebauung in dem zweiten Bereich ermittelt werden, anzeigen, dass in dem zweiten Bereich eine Baustelle vorhanden sein kann und/oder sich die Straßenführung geändert hat.

**Claims**

1. Method for estimating the position of the peripheral development (138) pertaining to a road, comprising the following steps:

   - travelling along a road section with a plurality of first vehicles each moving along a trajectory (102), each of the plurality of first vehicles performing the following steps:
   - determining a satellite-based position of the respective first vehicle by means of a satellite-based positioning system using position determination means of the respective first vehicle when it moves along the trajectory (102); and
   - determining a position of the peripheral development by means of a measurement using a sensor of the first vehicle and on the basis of the satellite-based position of the first vehicle; and
   - sending the determined position of the peripheral development to a central device, a probable position of the peripheral development being determined by virtue of the following steps being performed by the central device:

      - receiving a plurality of determined positions of the peripheral development, each of which has been determined by one of the plurality of first vehicles, at the central device; and
      - determining the probable position of the peripheral development on the basis of the plurality of determined positions of the peripheral development that have each been determined by one of the plurality of first vehicles,

   **characterized by** the following steps:

- determining first values of object positions (106 , 108 , 110 , 112) $Z_k = \{(x_n, y_n) \mid n = 1, ..., N\}$, as a determined position of the peripheral development at the time k, pertaining to a plurality N of static objects $Z_k$ outside the roadway with respect to the respective first vehicle by means of the sensor of the respective first vehicle at a plurality of times k = 1, ..., K and on the basis of the satellite-based position of the first vehicle;

- sending the first values to the central device as a determined position of the peripheral development;

- determining a first probability distribution $P(S|Z_K)$, which indicates whether there is a peripheral development at second values $m_v$ (120) of positions $(x_i, y_i)$, on the basis of the plurality K of determinations of the first values of object positions $Z_K$ at the times k for k = 1, ... K, where $P(S|Z_K)$ represents the conditional probability of a static peripheral development S and where $Z_K$ comprises all past determinations, at the times k, of first values of the object positions $Z_k$ and the current determination, at the time K, of first values of the object positions $Z_K$ of the first vehicle;

- sending the first probability distribution to the central device as a determined position of the peripheral development;

- receiving a plurality of first probability distributions for the probable position of the peripheral development, each of which has been determined by one of the plurality of first vehicles, at the central device as a determined position of the peripheral development; and

- determining third values (130) of the object positions $m_{fusion}$ as a probable position of the peripheral development on the basis of the plurality of first probability distributions (120) that have each been determined by the plurality of different first vehicles.

2. Method according to Claim 1, **characterized in that** the third values (130) of the object positions $m_{fusion}$ are determined by means of the plurality of second values $m_v$ (120) that have each been determined by the plurality of first vehicles.

3. Method according to Claim 1 or 2, **characterized in that** the step of determining a first probability distribution (120) $P(S|Z_K)$ comprises the following step:

   - determining a second probability distribution $P(S|Z_k)$ that indicates whether, at the time k of the measurement, there is a peripheral development at the object positions $(x_n, y_n)$ determined by one of the first vehicles.

4. Method according to Claim 3, **characterized in that** the step of determining the second probability distribution $P(S|Z_k)$ regarding whether, at the time of the measurement k, there is a peripheral development at the object positions $(x_n, y_n)$ determined by one of the first vehicles comprises the following step:

   - generating a first multimodal probability distribution $P(S|Z_k)$ relating to the peripheral development on the basis of the plurality N of static objects (106) identified at the object positions $(x_n, y_n)$ at the time k.

5. Method according to Claim 4, **characterized by** the following step:

   - determining a second multimodal probability distribution $P(S|Z_K)$ on the basis of the first multimodal probability distributions $P(S|Z_K)$ pertaining to the first value of the object positions $(x_n, y_n)$ of the at least one static object during chronologically successive measurements at the times k = 1, ..., K.

6. Method according to Claim 5, **characterized in that** the step of determining the second multimodal probability distribution $P(S|Z_K)$ comprises the following step:

   - merging and/or predicting the chronologically successive measurements at the times k = 1,..., K of the object positions on the driving plane on the basis of all previously determined first probability distributions $P(S|Z_K)$ at the individual times k by means of the formula:

$$P(S|Z_K)|_K = \frac{1}{K}\sum_{k=1}^{K} P(S|Z_k)$$

7. Method according to one of the preceding claims, **characterized in that** the at least one static object is detected without a stored model.

8.  Method according to one of the preceding claims, **characterized by** the step of determining a third probability distribution $P(S_O|Z_K)$ pertaining to the position of the static objects (106) in a direction orthogonal to the direction of travel O from the first probability distribution $P(S|Z_K)$ on the driving plane.

9.  Method according to Claim 8, **characterized by** the following step:

    - determining a second value $m_v$ of the position (120) of the peripheral development on a first side of the respective first vehicle on the basis of the third probability distribution $P(S_O|Z_K)$ pertaining to the static objects (106);
    - determining an uncertainty $\sigma_v$ (122) pertaining to the second value of the position of the peripheral development on a first side of the respective first vehicle on the basis of the third probability distribution $P(S_O|Z_K)$ pertaining to the static objects (106); and
    - transmitting the second value $m_v$ of the position (120) of the peripheral development on the first side and the uncertainty (122) pertaining to the second value to a central unit.

10. Method according to Claim 9, **characterized by** the following steps:

    - determining a second value $m_v$ of the position (120) of the peripheral development on a second side of the respective first vehicle on the basis of the third probability distribution $P(S_O|Z_K)$ pertaining to the static objects (106);
    - determining an uncertainty $\sigma_v$ (122) pertaining to the second value of the position on the second side of the respective first vehicle on the basis of the third probability distribution $P(S_O|Z_K)$ pertaining to the plurality of static objects; and
    - transmitting the second value of the position (120) of the plurality of static objects on the second side and the uncertainty (122) pertaining to the second value to the central unit.

11. Method according to either of Claims 9 and 10, **characterized by** the following steps:

    - receiving the second value $m_v$ of the position (120) of the peripheral development and the measure of uncertainty $\sigma_v$ (122) pertaining to the second value (120) of the position of the peripheral development from a plurality V of first vehicles (102); and
    - determining the position $m_{fusion}$ (130) of the peripheral development (138) and the positional uncertainty $\sigma_{fusion}$ pertaining to the peripheral development (138) on the basis of the second value of the position (120) and the uncertainty pertaining to the second value of the position (122) on the first and/or second side of the vehicle.

12. Method according to one of Claims 9 to 11, **characterized in that** the step of generating the third values (130) of the positions $m_{fusion}$ of the peripheral development and the positional uncertainty $\sigma_{fusion}$ pertaining to the peripheral development comprises at least one of the following:

    - using a measure of distance; and/or
    - computing the third values (130) of the object positions $m_{fusion}$ pertaining to the positions of the peripheral development (106) and the positional uncertainty $\sigma_{fusion}$ pertaining to the peripheral development by using the following formulae:

$$m_{fusion} = \sigma^2_{fusion} * \sum_{v=1}^{V} \frac{m_v}{\sigma_v^2}$$

and

$$\sigma^2_{fusion} = \left( \sum_{v=1}^{V} \frac{1}{\sigma_v^2} \right)^{-1}.$$

$$m_{fusion} = \sigma^2_{fusion} * \sum_{v=1}^{V} \frac{m_v}{\sigma_v^2}$$

und

$$\sigma^2_{fusion} = \left(\sum_{v=1}^{V} \frac{1}{\sigma_v^2}\right)^{-1}.$$

**13.** Method according to Claim 11 or 12, **characterized by** the following step:

- transmitting the position of the peripheral development (138) $m_{fusion}$ and the positional uncertainty $\sigma_{fusion}$ pertaining to the peripheral development (138) to at least one vehicle.

**14.** Method according to one of Claims 11 to 13, **characterized by** the following steps:

- correcting the satellite-based position determined by the respective first vehicle by means of the third values (130) of the object positions $m_{fusion}$ as a probable position of the peripheral development, in order to generate corrected trajectories (103 , 103a , 103b); and
- determining accumulations and/or a number of accumulations of corrected trajectories (103 , 103a , 103b), the positions of the accumulations indicating one lane each and the number of accumulations indicating a number of lanes.

**15.** Method for checking and/or changing the presumed position of a vehicle, **characterized by** the following steps:

- detecting a detected position of the peripheral development (106) by means of a vehicle travelling on a road; and
- comparing the position of the peripheral development as detected by the vehicle with an expected position of the peripheral development (130);

the detected position of the peripheral development (106) being determined by means of the method according to one of Claims 1 to 14.

**16.** Method for identifying roadworks and/or for identifying a change of road layout, comprising the steps of the method according to one of Claims 1 to 14.

**17.** Method according to Claim 16, **characterized by** the following steps:

- checking whether the determined probable position of the peripheral development in a first region has changed within a predetermined period of time and/or whether, on the basis of the positions of the peripheral developments as determined by at least a predetermined number of first vehicles, the probable position of the peripheral development in the first region has changed; and
- if the determined probable position of the peripheral development in the first region has changed, indicating that there may be a construction site, and/or the road layout has changed, in the first region.

**18.** Method according to Claim 16 or 17, **characterized by** the following steps:

- checking whether a plurality of candidates are determined as a determined probable position of the peripheral development in a second region; and
- if a plurality of candidates are determined as a determined probable position of the peripheral development in the second region, indicating that there may be a construction site, and/or the road layout has changed, in the second region.

**Revendications**

1. Procédé d'estimation de la position des constructions de bord (138) d'une chaussée, comprenant les étapes suivantes :

   - circulation d'une pluralité de premiers véhicules sur un tronçon de chaussée, qui se déplacent chacun le long d'une trajectoire (102), chacun parmi la pluralité de premiers véhicules effectuant les étapes suivantes :
   - détermination, de manière assistée par satellite, d'une position du premier véhicule respectif au moyen d'un système de positionnement par satellite à l'aide de moyens de détermination de position du premier véhicule respectif lorsqu'il se déplace le long de la trajectoire (102) ; et
   - détermination d'une position de la construction de bord au moyen d'une mesure à l'aide d'un capteur du premier véhicule et sur la base de la position, déterminée de manière assistée par satellite, du premier véhicule ; et
   - envoi de la position déterminée de la construction de bord à un dispositif central, les étapes suivantes étant effectuées par le dispositif central pour déterminer une position probable de la construction de bord :
   - réception, au niveau du dispositif central, d'une pluralité de positions déterminées de la construction de bord, lesquelles ont chacune été déterminées par l'un parmi la pluralité de premiers véhicules ; et
   - détermination de la position probable de la construction de bord sur la base de la pluralité de positions déterminées de la construction de bord, qui ont chacune été déterminées par l'un parmi la pluralité de premiers véhicules,

   **caractérisé par** les étapes suivantes :

   - détermination de premières valeurs de positions d'objets (106 , 108 , 110 , 112) $Z_k = \{ (x_n, y_n) \mid n = 1, ..., N\}$ en tant que position déterminée de la construction de bord à l'instant k d'une pluralité N d'objets statiques $Z_k$ en dehors de la voie de circulation par rapport au premier véhicule respectif au moyen du capteur du premier véhicule respectif à une pluralité d'instants k = 1, ..., K et sur la base de la position, déterminée de manière assistée par satellite, du premier véhicule ;
   - envoi au dispositif central des premières valeurs en tant que position déterminée de la construction de bord ;
   - détermination d'une première distribution de probabilités $P(S|Z_K)$ indiquant si une construction de bord se trouve à des deuxièmes valeurs $m_v$ (120) de positions $(x_i, y_i)$, sur la base de la pluralité K de déterminations des premières valeurs de positions d'objets $Z_K$ aux instants k pour k = 1, ... K, où $P(S|Z_K)$ représente la probabilité conditionnelle d'une construction de bord statique S, et où $Z_K$ comprend toutes les déterminations précédentes aux instants k de premières valeurs des positions d'objets $Z_K$ et la détermination actuelle à l'instant K de premières valeurs des positions d'objets $Z_K$ du premier véhicule ;
   - envoi au dispositif central de la première distribution de probabilités en tant que position déterminée de la construction de bord ;
   - réception, au niveau du dispositif central, d'une pluralité de premières distributions de probabilités pour la position probable de la construction de bord, chacune déterminée par l'un parmi la pluralité de premiers véhicules, en tant que position déterminée de la construction de bord ; et
   - détermination de troisièmes valeurs (130) des positions d'objets $m_{fusion}$ en tant que position probable de la construction de bord, sur la base de la pluralité de premières distributions de probabilités (120), qui ont chacune été déterminées par la pluralité de premiers véhicules différents.

2. Procédé selon la revendication 1, **caractérisé en ce que** les troisièmes valeurs (130) des positions d'objets $m_{fusion}$ sont déterminées au moyen de la pluralité de deuxièmes valeurs $m_v$ (120), qui ont chacune été déterminées par la pluralité de premiers véhicules.

3. Procédé selon la revendication 1 ou 2, **caractérisé en ce que** l'étape de détermination d'une première distribution de probabilités (120) $P(S|Z_K)$ comprend l'étape suivante :

   - détermination d'une deuxième distribution de probabilités $P(S|Z_k)$ qui indique si, à l'instant k de la mesure, une construction de bord se trouve aux positions d'objets $(x_n, y_n)$ déterminées par l'un des premiers véhicules.

4. Procédé selon la revendication 3, **caractérisé en ce que** l'étape de détermination de la deuxième distribution de probabilités $P(S|Z_k)$, indiquant si, à l'instant de la mesure k, une construction de bord se trouve aux positions d'objets $(x_n, y_n)$ déterminées par l'un des premiers véhicules, comprend l'étape suivante :

- génération d'une première distribution de probabilités multimodale $P(S|Z_k)$ concernant la construction de bord sur la base de la pluralité N d'objets statiques (106) détectés aux positions d'objets $(x_n, y_n)$ à l'instant k.

**5.** Procédé selon la revendication 4, **caractérisé par** l'étape suivante :

- détermination d'une deuxième distribution de probabilités multimodale $P(S|Z_K)$ sur la base des premières distributions de probabilités multimodales $P(S|Z_K)$ de la première valeur des positions d'objets $(x_n, y_n)$ d'au moins un objet statique lors de mesures successives dans le temps aux instants k = 1, ..., K.

**6.** Procédé selon la revendication 5, **caractérisé en ce que** l'étape de détermination de la deuxième distribution de probabilités multimodale $P(S|Z_K)$ comprend l'étape suivante :

- fusion et/ou prédiction des mesures successives dans le temps aux instants k = 1, ..., K des positions d'objets dans le plan de déplacement, sur la base de toutes les premières distributions de probabilités $P(S|Z_K)$ déterminées précédemment aux différents instants k, au moyen de la formule :

$$P(S|Z_K)|_K = \frac{1}{K} \sum_{k=1}^{K} P(S|Z_k)$$

**7.** Procédé selon l'une des revendications précédentes, **caractérisé en ce que** l'au moins un objet statique est détecté sans modèle mémorisé.

**8.** Procédé selon l'une des revendications précédentes, **caractérisé par** l'étape de détermination d'une troisième distribution de probabilités $P(S_O|Z_K)$ de la position des objets statiques (106) dans une direction orthogonale à la direction de déplacement O à partir de la première distribution de probabilités $P(S|Z_K)$ dans le plan de déplacement.

**9.** Procédé selon la revendication 8, **caractérisé par** l'étape suivante :

- détermination d'une deuxième valeur $m_v$ de la position (120) de la construction de bord sur un premier côté du premier véhicule respectif, sur la base de la troisième distribution de probabilités $P(S_O|Z_K)$ des objets statiques (106) ;
- détermination d'une incertitude $\sigma_v$ (122) de la deuxième valeur de la position de la construction de bord sur un premier côté du premier véhicule respectif sur la base de la troisième distribution de probabilités $P(S_O|Z_K)$ des objets statiques (106) ; et
- transmission à une unité centrale de la deuxième valeur $m_v$ de la position (120) de la construction de bord sur le premier côté et de l'incertitude (122) de la deuxième valeur.

**10.** Procédé selon la revendication 9, **caractérisé par** les étapes suivantes :

- détermination d'une deuxième valeur $m_v$ de la position (120) de la construction de bord sur un deuxième côté du premier véhicule respectif, sur la base de la troisième distribution de probabilités $P(S_O|Z_K)$ des objets statiques (106) ;
- détermination d'une incertitude $\sigma_v$ (122) de la deuxième valeur de la position sur le deuxième côté du premier véhicule respectif, sur la base de la troisième distribution de probabilités $P(S_O|Z_K)$ de la pluralité d'objets statiques ; et
- transmission à l'unité centrale de la deuxième valeur de la position (120) de la pluralité d'objets statiques sur le deuxième côté et de l'incertitude (122) de la deuxième valeur.

**11.** Procédé selon l'une des revendications 9 ou 10, **caractérisé par** les étapes suivantes :

- réception de la deuxième valeur $m_v$ de la position (120) de la construction de bord et de la mesure d'incertitude $\sigma_v$ (122) de la deuxième valeur (120) de la position de la construction de bord parmi une pluralité V de premiers véhicules (102) ; et
- détermination de la position $m_{fusion}$ (130) de la construction de bord (138) et de l'incertitude de position $\sigma_{fusion}$ de la construction de bord (138) sur la base de la deuxième valeur de la position (120) et de l'incertitude de la deuxième valeur de la position (122) sur le premier et/ou le deuxième côté du véhicule.

**12.** Procédé selon l'une des revendications 9 à 11, **caractérisé en ce que** l'étape de génération des troisièmes valeurs (130) des positions $m_{fusion}$ de la construction de bord et de l'incertitude de position $m_{fusion}$ de la construction de bord comprend au moins l'une des étapes suivantes :

- utilisation d'une mesure de distance ; et/ou
- calcul des troisièmes valeurs (130) des positions d'objets $m_{fusion}$ des positions de la construction de bord (106) et de l'incertitude de position $\sigma_{fusion}$ de la construction de bord par utilisation des formules suivantes :

$$m_{fusion} = \sigma_{fusion}^2 * \sum_{v=1}^{V} \frac{m_v}{\sigma_v^2}$$

et

$$\sigma_{fusion}^2 = \left( \sum_{v=1}^{V} \frac{1}{\sigma_v^2} \right)^{-1}.$$

**13.** Procédé selon la revendication 11 ou 12, **caractérisé par** l'étape suivante :

- transmission à au moins un véhicule de la position de la construction de bord (138) $m_{fusion}$ et de l'incertitude de position $\sigma_{fusion}$ de la construction de bord (138).

**14.** Procédé selon l'une des revendications 11 à 13, **caractérisé par** les étapes suivantes :

- correction de la position, déterminée de manière assistée par satellite, par le premier véhicule respectif au moyen des troisièmes valeurs (130) des positions d'objets $m_{fusion}$ en tant que position probable de la construction de bord, afin de générer des trajectoires corrigées (103, 103a, 103b) ; et
- détermination de cumuls et/ou d'un nombre de cumuls de trajectoires corrigées (103, 103a, 103b), les positions des cumuls indiquant chacune une voie de circulation et le nombre de cumuls indiquant le nombre de voies de circulation.

**15.** Procédé de vérification et/ou de modification de la position présumée d'un véhicule, **caractérisé par** les étapes suivantes :

- acquisition d'une position détectée de la construction de bord (106) au moyen d'un véhicule circulant sur une chaussée ; et
- comparaison de la position de la construction de bord détectée par le véhicule à une position attendue de la construction de bord (130) ;

la position détectée de la construction de bord (106) étant déterminée au moyen du procédé selon l'une des revendications 1 à 14.

**16.** Procédé de reconnaissance d'un chantier routier et/ou de reconnaissance d'une modification d'un tracé de chaussée, comprenant les étapes du procédé selon l'une des revendications 1 à 14.

**17.** Procédé selon la revendication 16, **caractérisé par** les étapes suivantes :

- vérification du fait de savoir si la position probable détectée de la construction de bord se trouve dans une première zone pendant une période prédéterminée et/ou si, sur la base des positions détectées de la construction de bord par au moins un nombre prédéterminé de premiers véhicules, la position probable de la construction de bord a changé dans la première zone ; et

- dans le cas où la position probable déterminée de la construction de bord a changé dans la première zone, indication du fait qu'un chantier peut être présent dans la première zone et/ou que le tracé de la chaussée a changé.

18. Procédé selon la revendication 16 ou 17, **caractérisé par** les étapes suivantes :

- vérification du fait de savoir si une pluralité de candidats sont déterminés en tant que position probable de la construction de bord dans une deuxième zone ; et
- dans le cas où une pluralité de candidats sont déterminés en tant que position probable déterminée de la construction de bord dans la deuxième zone, indication du fait qu'un chantier peut être présent dans la deuxième zone et/ou que le tracé de la chaussée a changé.

Fig. 1

EP 3 391 086 B1

**Fig. 2**

Fig. 3

Fig. 4

Fig. 5

EP 3 391 086 B1

**Fig. 6**

EP 3 391 086 B1

132
134
136
138

135

Fig. 7

142

dv

D

104a
102a

138    102b    104b    102    104

EP 3 391 086 B1

**Fig. 8**

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CN 101206644 B

- DE 102013208521 A1

**In der Beschreibung aufgeführte Nicht-Patentliteratur**

- **ANDREAS SCHINDLER.** Vehicle Self-localization with High-Precision Digital Maps. *IEEE Intelligent Vehicles Symposium,* 2013
- **ULF NOYER et al.** Generating High Precision Maps for Advanced Guidance Support. *IEEE Intelligent Vehicles Symposium,* 2008

- **SEBASTIAN RAUCH.** Kollektives Erlernen hochgenauer Straßenmodelle. *6. Tagung Fahrerassistenz, München,* 2013